(19) Europäisches Patentamt
European Patent Office
Office européen des brevets

(11) **EP 4 099 060 B1**

(12) **EUROPEAN PATENT SPECIFICATION**

(45) Date of publication and mention
of the grant of the patent:
**22.05.2024 Bulletin 2024/21**

(21) Application number: **20916508.3**

(22) Date of filing: **31.01.2020**

(51) International Patent Classification (IPC):
$G06V\ 10/25^{(2022.01)}$ $\quad$ $G01S\ 7/48^{(2006.01)}$
$G01S\ 17/86^{(2020.01)}$ $\quad$ $G01S\ 17/89^{(2020.01)}$
$G01S\ 17/931^{(2020.01)}$ $\quad$ $G06V\ 20/58^{(2022.01)}$
$G06V\ 40/10^{(2022.01)}$ $\quad$ $G06V\ 10/20^{(2022.01)}$

(52) Cooperative Patent Classification (CPC):
**G01S 17/931; G01S 7/4802; G01S 17/86;
G01S 17/89; G06V 10/25; G06V 10/255;
G06V 20/58; G06V 40/10**

(86) International application number:
**PCT/IB2020/000056**

(87) International publication number:
**WO 2021/152340 (05.08.2021 Gazette 2021/31)**

(54) **OBJECT RECOGNITION METHOD AND OBJECT RECOGNITION DEVICE**

OBJEKTERKENNUNGSVERFAHREN UND OBJEKTERKENNUNGSVORRICHTUNG

PROCÉDÉ DE RECONNAISSANCE D'OBJET ET DISPOSITIF DE RECONNAISSANCE D'OBJET

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**07.12.2022 Bulletin 2022/49**

(73) Proprietors:
• **NISSAN MOTOR Co., Ltd.
Yokohama-shi, Kanagawa 221-0023 (JP)**
• **Renault s.a.s
92100 Boulogne Billancourt (FR)**

(72) Inventors:
• **KUROTOBI, Tomoko
Atsugi-shi, Kanagawa 243--0123 (JP)**
• **NODA, Kuniaki
Atsugi-shi, Kanagawa 243--0123 (JP)**
• **IKEGAMI, Takashi
Atsugi-shi, Kanagawa 243--0123 (JP)**
• **MATSUO, Haruo
Atsugi-shi, Kanagawa 243--0123 (JP)**

(74) Representative: **Grünecker Patent- und
Rechtsanwälte
PartG mbB
Leopoldstraße 4
80802 München (DE)**

(56) References cited:
WO-A1-2011/070927 $\quad$ JP-A- H08 329 393
JP-A- 2003 084 064 $\quad$ JP-A- 2003 302 470
JP-A- 2004 280 451 $\quad$ JP-A- 2009 025 956
JP-A- 2018 160 049 $\quad$ US-A1- 2006 184 274
US-A1- 2018 313 940 $\quad$ US-A1- 2019 371 056

• **KIDONO, KIYOSUMI et al.: "Pedestrian
recognition integrating high-definition LIDAR
with vision", Proceedings of the 18th Symposium
on Sensing via Image Information, June 2012
(2012-06), pages 1-6,**

**Description**

The present invention relates to an object recognition method and an object recognition device.

In PTL 1, a technology for extracting a group of pedestrian candidate points by grouping a group of points acquired by detecting a pedestrian by a laser radar, determining a position of a detection region, based on a recognition result of the pedestrian by image recognition, extracting a group of points included in the detection region from the group of pedestrian candidate points, and detecting the extracted group of points as a pedestrian is described.

PTL1: JP 2010-071942 A

US 2006/184274 A1 relates to a moving robot that recognizes obstacles in its surroundings. For this purpose, the robot employs an imaging apparatus and a range detecting apparatus. The robot is also able to perform person recognition.

US 2019/371056 A1 relates to a method for analyzing objects and determining material properties of said objects. Imaging systems, such as cameras and laser scanners, are employed to create a 3D reconstruction of the object. Spectral profiles are used to determine the material properties.

However, in conventional technologies, there has been a possibility that an image (a picture or a photograph) of a person drawn on an object (such as the body of a bus or a tramcar) or a passenger in a vehicle is falsely detected as a pedestrian.

An object of the present invention is to improve detection precision of a pedestrian existing in the surroundings of the own vehicle.

According to an aspect of the present invention, there is provided an object recognition method including: detecting a plurality of positions on surfaces of objects in surroundings of an own vehicle along a predetermined direction and acquiring a group of points; generating a captured image of surroundings of the own vehicle; grouping points included in the acquired group of points and classifying the points into a group of object candidate points; extracting, from among object candidate points, the object candidate points being points included in the group of object candidate points, a position at which change in distance from the own vehicle between adjacent object candidate points increases from a value equal to or less than a predetermined threshold value to a value greater than the predetermined threshold value as a boundary position candidate, the boundary position candidate being an outer end position of an object; extracting a region in which a person is detected in the captured image as a partial region by image recognition processing; determining whether or not, in the captured image, a position of the boundary position candidate in the predetermined direction coincides with a boundary position of the partial region, the boundary position being an outer end position; and when the position of the boundary position candidate coincides with the boundary position of the partial region recognizing that a pedestrian exists in the partial region; and recognizing as the pedestrian, a group of points located in the partial region among the group of object candidate points projected into an image coordinate system of the captured image.

According to the aspect of the present invention, it is possible to improve detection precision of a pedestrian existing in the surroundings of the own vehicle.

The object and advantages of the invention will be realized and attained by means of the elements and combinations particularly pointed out in the claims. It is to be understood that both the foregoing general description and the following detailed description are exemplary and explanatory and are not restrictive of the invention.

FIG. 1 is a diagram illustrative of a schematic configuration example of a vehicle control device of embodiments;

FIG. 2 is an explanatory diagram of a camera and a range sensor illustrated in FIG. 1;

FIG. 3 is a schematic explanatory diagram of an object recognition method of the embodiments;

FIG. 4A is a block diagram of a functional configuration example of an object recognition controller of a first embodiment;

FIG. 4B is a block diagram of a functional configuration example of an object recognition controller of a variation;

FIG. 5A is a diagram illustrative of an example of a group of object candidate points into which a group of points acquired by the range sensor in FIG. 1 is classified;

FIG. 5B is a diagram illustrative of an example of thinning-out processing of the group of object candidate points;

FIG 5C is a diagram illustrative of an example of an approximate curve calculated from the group of object candidate points;

FIG. 5D is a diagram illustrative of an example of boundary position candidates;

FIG. 6 is an explanatory diagram of an example of a calculation method of curvature;

FIG. 7A is a diagram illustrative of an example of a captured image captured by the camera in FIG. 1;

FIG. 7B is a diagram illustrative of an example of boundary regions of a partial region;

FIG. 8 is an explanatory diagram of an extraction example of a group of points associated with a pedestrian;

FIG. 9 is a flowchart of an example of an object recognition method of the first embodiment;

FIG. 10 is a diagram illustrative of an example of groups of points acquired in a plurality of layers;

FIG. 11 is a block diagram of a functional configuration example of an object recognition controller of a second embodiment;

FIG. 12A is a diagram illustrative of an example of boundary position candidates in a plurality of layers;

FIG. 12B is an explanatory diagram of inclusive regions including the boundary position candidates in the plurality of layers;

FIG. 13 is an explanatory diagram of an extraction example of groups of points associated with a pedestrian;

FIG. 14 is a flowchart of an example of an object recognition method of the second embodiment;

FIG. 15A is a diagram illustrative of an example of approximate straight lines calculated from the boundary position candidates in the plurality of layers;

FIG. 15B is a diagram illustrative of an example of centroids of the boundary position candidates in the plurality of layers;

FIG. 16A is an explanatory diagram of an example of trajectory planes obtained as trajectories of an optical axis of a laser beam in a main scanning;

FIG. 16B is an explanatory diagram of another example of the trajectory planes obtained as trajectories of the optical axis of the laser beam in the main scanning; and

FIG. 16C is an explanatory diagram of an example of a two-dimensional plane that is not perpendicular to trajectory planes.

Description of Embodiments

Embodiments of the present invention will now be described with reference to the drawings.

(First Embodiment)

(Configuration)

An own vehicle 1 mounts a vehicle control device 2 according to an embodiment thereon. The vehicle control device 2 recognizes an object in the surroundings of the own vehicle 1 and controls travel of the own vehicle, based on presence or absence of an object in the surroundings of the own vehicle 1. The vehicle control device 2 is an example of an "object recognition device" described in the claims.

The vehicle control device 2 includes object sensors 10, an object recognition controller 11, a travel control unit 12, and actuators 13.

The object sensors 10 are sensors that are configured to detect objects in the surroundings of the own vehicle 1. The object sensors 10 include a camera 14 and a range sensor 15.

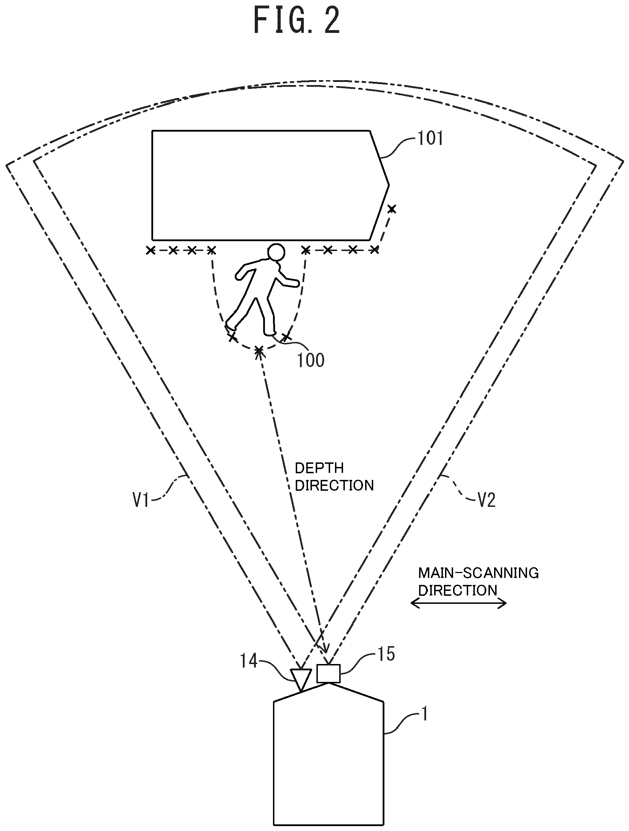

The camera 14 captures an image of the surroundings of the own vehicle 1 and generates a captured image. FIG. 2 is now referred to. For example, the camera 14 captures an image of objects 100 and 101 in a field of view V1 in the surroundings of the own vehicle 1 and generates a captured image in which the objects 100 and 101 are captured.

Herein, a case is assumed where the object 100 in the surroundings of the own vehicle 1 is a pedestrian and the object 101 is a parked vehicle that exists at a place in proximity to the pedestrian 100.

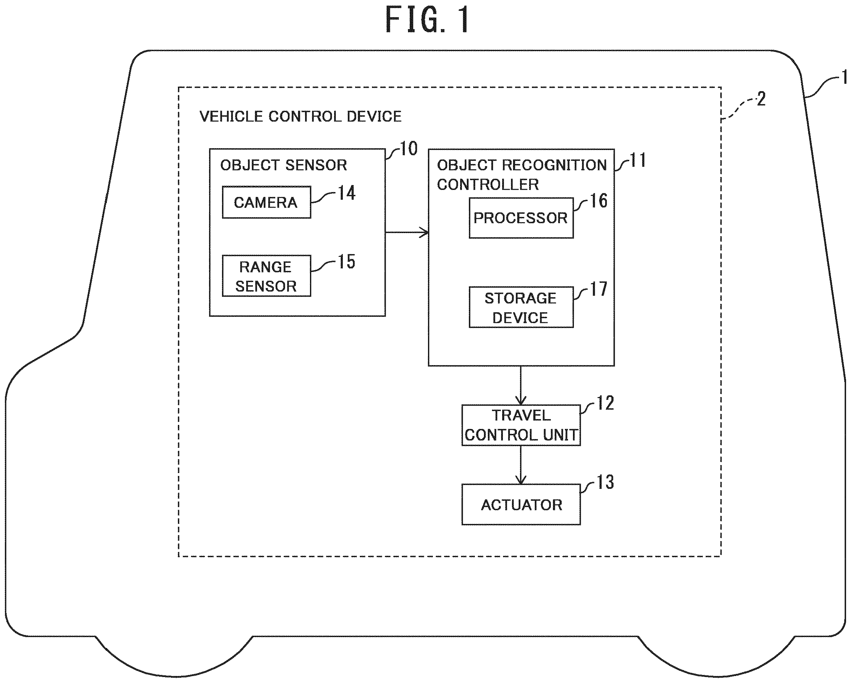

FIG. 1 is now referred to. The range sensor 15, by emitting outgoing waves for ranging to the surroundings of the own vehicle 1 and receiving reflected waves of the outgoing waves from surfaces of objects, detects positions of reflection points on the surfaces of the objects.

The range sensor 15 may be, for example, a laser radar, a millimeter-wave radar, and a light detection and ranging or laser imaging detection and ranging (LIDAR), or a laser range-finder (LRF) . The following description will be made using an example of the range sensor 15 configured to emit laser beams as outgoing waves for ranging.

FIG. 2 is now referred to. The range sensor 15 changes an emission axis (optical axis) of a laser beam in the main-scanning direction by changing an emission angle in the horizontal direction within a search range V2 with an emission angle in the vertical direction fixed and scans the surroundings of the own vehicle 1 with laser beams. Through this processing, the range sensor 15 detects positions of a plurality of points on surfaces of objects in the search range V2 along the main-scanning direction and acquires the plurality of points as a group of points.

In FIG. 2, individual points included in a group of points are denoted by "x" marks . The same applies to other drawings . Note that, since the laser beams are emitted at a predetermined equiangular interval in the main-scanning direction as described above, intervals in the main-scanning direction between individual points constituting the group of points are substantially regular intervals.

In addition, the optical axis direction of a laser beam emitted by the range sensor 15, that is, a direction pointing from the position of the range sensor 15 (that is, the position of the own vehicle 1) to each point in the group of points, is referred to as "depth direction" in the following description.

The range sensor 15 may perform scanning along a single main-scanning line by emitting laser beams only at a single emission angle in the vertical direction or may perform sub-scanning by changing the emission angle in the vertical direction. When the sub-scanning is performed, the emission axis of the laser beam is changed in the main-scanning direction at each of different emission angles in the vertical direction by changing the emission angle in the horizontal direction with the emission angle in the vertical direction fixed to each of a plurality of angles in the vertical direction.

A region that is scanned in the main scanning at each of emission angles in the vertical direction is sometimes referred to as "layer" or "scan layer".

When the range sensor 15 performs scanning by emitting laser beams at a single emission angle in the vertical direction, only a single layer is scanned. When the range sensor 15 performs sub-scanning by changing the emission angle in the vertical direction, a plurality of layers are scanned. The position in the vertical direction of each layer is determined by the emission angle in the vertical direction of laser beams. A laser radar that scans a plurality of layers is sometimes referred to as a "multi-layer laser radar" or a "multiple layer laser radar".

In the first embodiment, a case where the range sensor 15 scans a single layer will be described. A case where the range sensor 15 scans a plurality of layers will be described in a second embodiment.

FIG. 1 is now referred to. The object recognition controller 11 is an electronic control unit (ECU) configured to recognize objects in the surroundings of the own vehicle 1, based on a detection result by the object sensors 10. The object recognition controller 11 includes a processor 16 and peripheral components thereof. The processor 16 may be, for example, a central processing unit (CPU) or a micro-processing unit (MPU).

The peripheral components include a storage device 17 and the like. The storage device 17 may include any of a semiconductor storage device, a magnetic storage device, and an optical storage device. The storage device 17 may include registers, a cache memory, or a memory used as a main storage device, such as a read only memory (ROM) and a random access memory (RAM).

Functions of the object recognition controller 11, which will be described below, are achieved by, for example, the processor 16 executing computer programs stored in the storage device 17.

Note that the object recognition controller 11 may be formed using dedicated hardware for performing each type of information processing that will be described below.

For example, the object recognition controller 11 may include a functional logic circuit that is implemented in a general-purpose semiconductor integrated circuit. For example, the object recognition controller 11 may include a programmable logic device (PLD), such as a field-programmable gate array (FPGA), and the like.

The travel control unit 12 is a controller configured to control travel of the own vehicle 1. The travel control unit 12, by driving the actuators 13, based on a recognition result of an object in the surroundings of the own vehicle 1 recognized by the object recognition controller 11, executes at least any one of steering control, acceleration control, and deceleration control of the own vehicle 1.

The travel control unit 12, for example, includes a processor and peripheral components thereof. The processor may be, for example, a CPU or an MPU. The peripheral components include a storage device. The storage device may include a register, a cache memory, or a memory, such as a ROM or a RAM, a semiconductor storage device, a magnetic storage device, and an optical storage device. The travel control unit 12 may be dedicated hardware.

The actuators 13 operate a steering mechanism, accelerator opening, and a braking device of the own vehicle 1 according to a control signal from the travel control unit 12 and thereby generates vehicle behavior of the own vehicle 1. The actuators 13 include a steering actuator, an accelerator opening actuator, and a brake control actuator. The steering actuator controls steering direction and the amount of steering in the steering performed by the steering mechanism of the own vehicle 1. The accelerator opening actuator controls the accelerator opening of the own vehicle 1. The brake control actuator controls braking action of the braking device of the own vehicle 1.

Next, recognition processing of objects in the surroundings of the own vehicle 1 performed by the object recognition controller 11 will be described.

The object recognition controller 11 detects an object in the surroundings of the own vehicle 1 and recognizes a type and attribute of the detected object, based on detection results by the camera 14 and the range sensor 15, which are mounted as the object sensors 10. For example, the object recognition controller 11 recognizes a type (a vehicle, a pedestrian, a road structure, or the like) of an object in the surroundings of the own vehicle 1 by image recognition processing based on a captured image captured by the camera 14.

In addition, for example, the object recognition controller 11 detects size and a shape of an object in the surroundings of the own vehicle 1, based on point group information acquired by the range sensor 15 and recognizes a type (a vehicle, a pedestrian, a road structure, or the like) of the object in the surroundings of the own vehicle 1, based on the size and the shape.

However, there are some cases where it is difficult to discriminate a columnar structure having approximately the same diameter as a human body (such as a pole installed between a crosswalk and a sidewalk) from a pedestrian only from point group information acquired by the range sensor 15.

In addition, only from image recognition processing based on a captured image, there is a possibility that an image (a picture or a photograph) of a person drawn on an object (such as the body of a bus or a tramcar) or a passenger on board a vehicle is falsely detected as a pedestrian, and there has thus been a possibility that such false detection poses a problem for the travel control of the own vehicle 1.

For example, there has been a possibility that, when speed of a pedestrian is assumed to be zero in constant speed running control and inter-vehicle distance control, such as adaptive cruise control (ACC), the own vehicle 1 falsely detects a passenger on board a preceding vehicle or an image drawn on a preceding vehicle as a pedestrian and unnecessarily rapidly decelerates.

Therefore, the object recognition controller 11 of the embodiment recognizes a pedestrian, using point group information acquired by the range sensor 15 and image recognition processing based on a captured image captured by the camera 14 in combination.

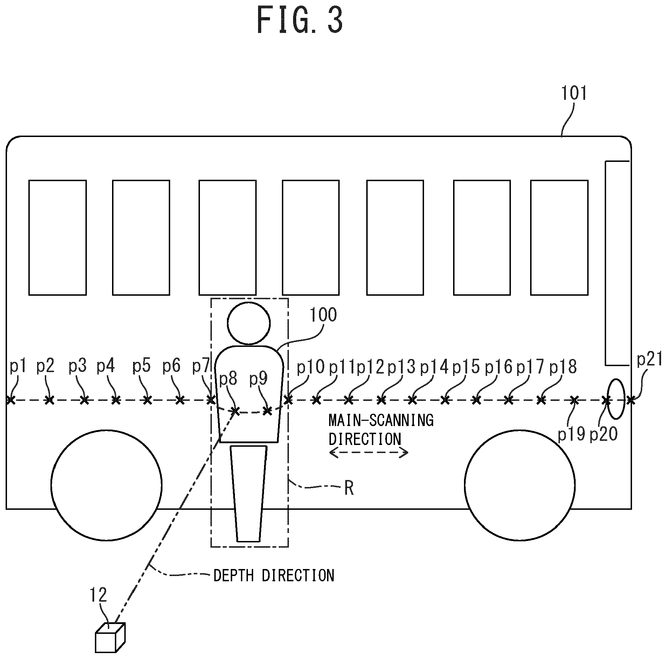

FIG. 3 is now referred to. First, the object recognition controller 11 extracts individual objects by grouping (clustering) points included in a group of points acquired by the range sensor 15 according to degrees of proximity and classifies the points into groups of object candidate points each of which is a candidate of a group of points indicating an extracted object.

In the example in FIG. 3, a pedestrian 100 exists at a place in proximity to a parked vehicle 101, and a group of points p1 to p21 of the pedestrian 100 and the parked vehicle 101 are extracted as a group of object candidate points. Each point included in the group of object candidate points p1 to p21 is referred to as "object candidate point".

The object recognition controller 11 extracts a position at which a ratio of positional change in the depth direction (the optical axis direction of a laser beam) between adjacent object candidate points (that is, change in distance from the own vehicle 1 to object candidate points) to positional change in the main-scanning direction between the adjacent object candidate points increases from a ratio equal to or less than a predetermined threshold value to a ratio greater than the predetermined threshold value, as a boundary position candidate that is a candidate of a boundary position of an object in the main-scanning direction, the boundary position being an outer end position.

Note that, in the laser radar, a positional change in the main-scanning direction (an interval in the main-scanning direction) between adjacent object candidate points is a substantially regular interval, as described above. Thus, the ratio of change in distance from the own vehicle 1 to positional change in the main-scanning direction between adjacent object candidate points changes only depending on the change in distance from the own vehicle 1. Therefore, a position at which the ratio of change in distance from the own vehicle 1 to positional change in the main-scanning direction between adjacent object candidate points increases from a ratio equal to or less than a predetermined threshold value to a ratio greater than the predetermined threshold value is a position at which the change in distance from the own vehicle 1 between adjacent object candidate points increases from a value equal to or less than a predetermined threshold value to a value greater than the predetermined threshold value.

In the example in FIG. 3, since the object candidate points p7 and p10 are points located at boundaries between the pedestrian 100 and the parked vehicle 101, the object candidate points p7 and p10 have comparatively large changes in distance from the own vehicle between adjacent object candidate points and are extracted as boundary position candidates. In addition, since the object candidate points p1 and p21 are the edges of the group of object candidate points p1 to p21, the object candidate points p1 and p21 are extracted as boundary position candidates.

On the other hand, since the object candidate points p2 to p6, p8, p9, and p11 to p20 have comparatively small changes in distance from the own vehicle between adjacent object candidate points, the object candidate points p2 to p6, p8, p9, and p11 to p20 are not extracted as boundary position candidates.

Next, the object recognition controller 11, by executing image recognition processing on a captured image captured by the camera 14, extracts a partial region R in which a person is detected, within the captured image. Note that examples of a method for extracting, within a captured image, a partial region R in which a person is detected include a method of recognizing a continuous constituent element in a face recognized using well-known facial recognition, a method of storing patterns of overall shapes of persons and recognizing a person using patten matching, and a simplified method of recognizing a person, based on a detection result that an aspect ratio of an object in the captured image is within a range of aspect ratios of persons, and it is possible to detect a person by applying such a well-known method and extract a region including the detected person as a partial region R.

When, in the captured image, the position of a boundary position candidate coincides with a boundary position between the partial region R and the other region in the main-scanning direction, the object recognition controller 11 recognizes that a pedestrian exists in the partial region R. The object recognition controller 11 recognizes object candidate points located inside the partial region R as a pedestrian. Note that, hereinafter, a boundary position between a partial region R and another region in the main-scanning direction in a captured image is simply referred to as a boundary position of the partial region R.

In the example in FIG. 3, the positions of the boundary position candidates p7 and p10 coincide with the boundary positions of the partial region R. Therefore, the object recognition controller 11 recognizes that the pedestrian 100 exists in the partial region R and recognizes the object candidate points p7 to p10 located inside the partial region R as a pedestrian.

With this configuration, the object recognition controller 11 is able to determine whether or not a solid object exists in the partial region R in which a person is detected by image recognition processing and, when a solid object exists in the partial region R, recognize the solid object as a pedestrian. This capability enables whether or not a group of points detected by the range sensor 15 is a pedestrian to be accurately determined. In addition, it is possible to prevent an image of a person drawn on an object or a passenger in a vehicle from being falsely detected as a pedestrian. Consequently, it is possible to improve detection precision of the pedestrian 100 existing in the surroundings of the own vehicle 1.

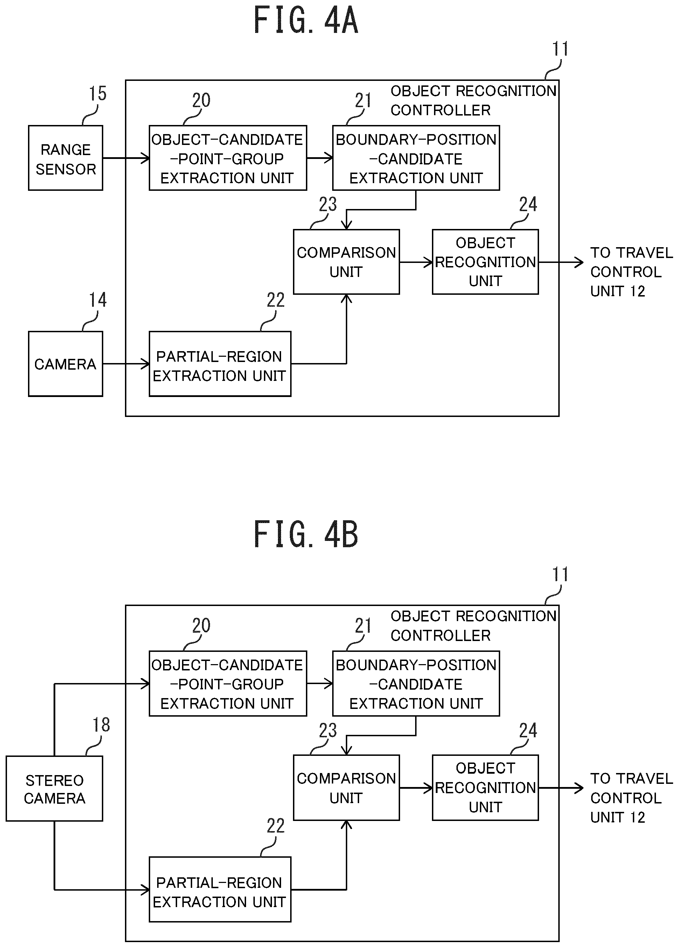

Next, an example of a functional configuration of the object recognition controller 11 will be described in detail with reference to FIG. 4A. The object recognition controller 11 includes an object-candidate-point-group extraction unit 20, a boundary-position-candidate extraction unit 21, a partial-region extraction unit 22, a comparison unit 23, and an object recognition unit 24.

A group of points that the range sensor 15 has acquired is input to the object-candidate-point-group extraction unit 20. In addition, a captured image that the camera 14 has generated is input to the partial-region extraction unit 22.

Note that the vehicle control device 2 may include a stereo camera 18 in place of the range sensor 15 and the camera 14.

FIG. 4B is now referred to. The stereo camera 18 generates a parallax image from a plurality of images captured by a plurality of cameras and, by acquiring, from the parallax image, pixels that are arranged in line in the predetermined main-scanning direction, acquires a group of points indicating a plurality of positions on surfaces of objects in the surroundings of the own vehicle 1.

The stereo camera 18 inputs the acquired group of points to the object-candidate-point-group extraction unit 20. In addition to the above, the stereo camera 18 inputs any one of the plurality of images captured by the plurality of cameras to the partial-region extraction unit 22 as a captured image of the surroundings of the own vehicle.

FIG. 4A is now referred to. The object-candidate-point-group extraction unit 20 extracts individual objects by grouping a group of points acquired from the range sensor 15 according to degrees of proximity and classifies the points into groups of object candidate points each of which is a candidate of a group of points indicating an extracted object. The object-candidate-point-group extraction unit 20 may use an r-θ coordinate system or an XYZ coordinate system with the range sensor 15 taken as the origin for the calculation of degrees of proximity.

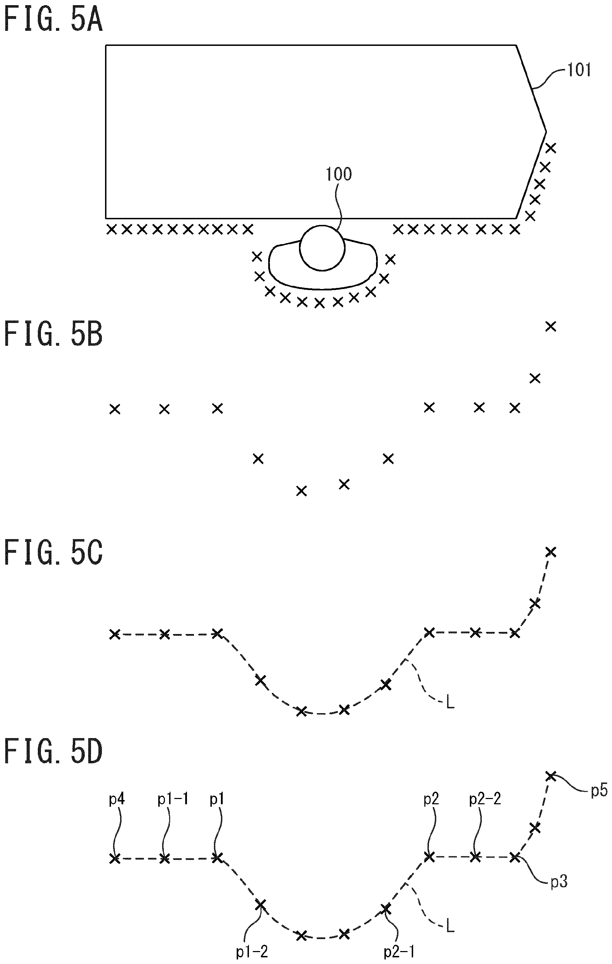

In FIG. 5A, an example of a group of object candidate points is illustrated. The "x" marks in the drawing illustrate individual object candidate points included in the group of object candidate points. In the example in FIG. 5A, the pedestrian 100 exists at a place in proximity to the parked vehicle 101, and a set of object candidate points of the pedestrian 100 and the parked vehicle 101 are extracted as a group of object candidate points.

The boundary-position-candidate extraction unit 21 extracts a candidate of a boundary position (that is, a boundary position candidate) of an object from a group of object candidate points extracted by the object-candidate-point-group extraction unit 20.

FIG. 5B is now referred to. First, the boundary-position-candidate extraction unit 21, by thinning out a group of object candidate points extracted by the object-candidate-point-group extraction unit 20, reduces the number of object candidate points included in the group of object candidate points and simplifies the group of object candidate points. The boundary-position-candidate extraction unit 21 may thin out the group of object candidate points, using an existing method, such as a voxel grid method and a two-dimensional grid method. Thinning out the group of object candidate points enables a processing load in after-mentioned processing to be reduced. However, when the original group of object candidate points is not dense and it is not necessary to reduce a processing load, the group of object candidate points may be used without thinning-out.

Next, the boundary-position-candidate extraction unit 21 extracts, from among a group of object candidate points after thinning-out as described above, a position at which positional change in the depth direction (the optical axis direction of a laser beam) between adjacent object candidate points in the main-scanning direction, that is, change in distance from the own vehicle 1 between object candidate points, increases from a value equal to or less than a predetermined threshold value to a value greater than the predetermined threshold value as a boundary position candidate that is a candidate of a boundary position of an object. Note that the predetermined threshold value is a threshold value that is of a sufficient magnitude to enable a boundary position of an object to be extracted and that is determined in advance by an experiment or the like.

Specifically, the boundary-position-candidate extraction unit 21 calculates an approximate curve L by approximating the group of object candidate points, which has been simplified, by a curve, as illustrated in FIG. 5C. As a calculation method of an approximate curve L, various types of existing methods can be used. In addition, for example, the approximate curve L may be interpreted as an assembly of short line segments (that is, a point sequence). When the group of points is sparse, the approximate curve L may be generated by successively connecting object candidate points to each other from an end point.

The boundary-position-candidate extraction unit 21 calculates a curvature ρ of the approximate curve L at each of the object candidate points. The boundary-position-candidate extraction unit 21 extracts a position at which the curvature ρ exceeds a predetermined threshold value as a boundary position candidate. The boundary-position-candidate extraction unit 21 extracts positions of object candidate points p1, p2, and p3 at which the curvature ρ exceeds the predetermined threshold value as boundary position candidates, as illustrated in FIG. 5D. In addition, the boundary-position-candidate extraction unit 21 extracts positions of object candidate points p4 and p5 that are located at the edges of the group of object candidate points as boundary position candidates.

That is, in FIG. 5D, with respect to the object candidate point p1 and an object candidate point p1-1, which are adjacent object candidate points, there is little difference in distances from the own vehicle 1 (change in distance) between the object candidate points . Thus, a change in distance between the object candidate point p1 and the object candidate point p1-1 is equal to or less than a predetermined threshold value. On the other hand, since change in distance between the object candidate point p1 and an object candidate point p1-2, which are adjacent object candidate points, is large, the change in distance between the object candidate points exceeds the predetermined threshold value. Therefore, the object candidate point p1 that is a position at which the change in distance between adjacent object candidate points increases from a value equal to or less than the predetermined threshold value to a value greater than the predetermined threshold value is extracted as a boundary position candidate. Note that the object candidate point p3 is also extracted as a boundary position candidate in a similar manner.

In addition, since, with respect to the adjacent candidate object candidate point p2 and an object candidate point p2-2, there is little change in distance between the object candidate points, the change in distance between the object candidate points is equal to or less than the predetermined threshold value. On the other hand, since change in distance between an adjacent object candidate point p2-1 and the object candidate point p2 is large, the change in distance between the object candidate points exceeds the predetermined threshold value. Therefore, the object candidate point p2 that is a position at which the change in distance between adjacent object candidate points increases from a value equal to or less than the predetermined threshold value to a value greater than the predetermined threshold value is extracted as a boundary position candidate.

In the present embodiment, in order to simplify extraction processing of a boundary position candidate as described above, an approximate curve L is calculated by approximating a group of object candidate points by a curve and a boundary position candidate is extracted based on whether or not a curvature ρ of the approximate curve L at each of the object candidate points is equal to or greater than a predetermined curvature. That is, using characteristics that the curvature ρ of an approximate curve becomes large at a position at which change in distance between adjacent object candidate points increases from a value equal to or less than a predetermined threshold value to a value greater than the predetermined threshold value, extraction of a boundary position candidate using the approximate curve L is performed. Note that the predetermined curvature is a curvature that is set in a corresponding manner to the above-described predetermined threshold value for change in distance. The following description will be made assuming that, in the present embodiment, a boundary position candidate is extracted using curvature of an approximate curve L approximating a group of object candidate points by a curve.

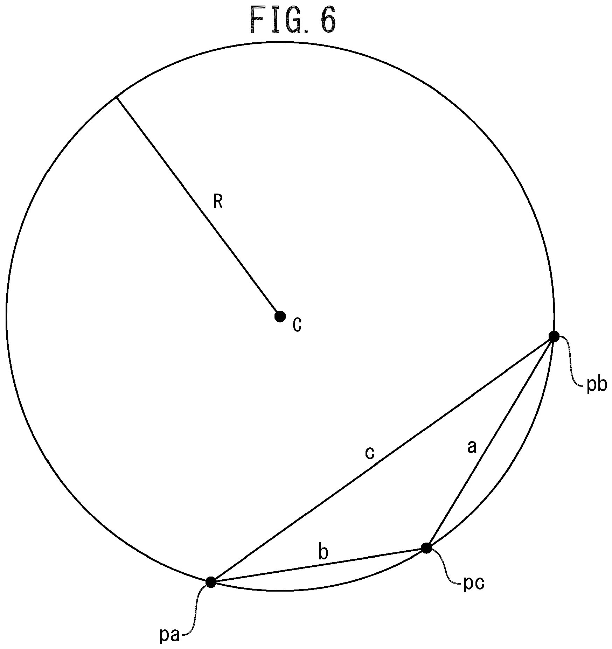

For example, the boundary-position-candidate extraction unit 21 may calculate curvature ρ of an approximate curve L in the following manner. FIG. 6 is now referred to. An object candidate point to which attention is paid is denoted by pc, and object candidate points adjacent to each other with the object candidate point pc interposed therebetween are denoted by pa and pb. When it is assumed that lengths of opposite sides of vertices pa, pb, and pc of a triangle with the object candidate point pa, pb, and pc as vertices are a, b, and c, respectively, radius R of a circle that circumscribes the triangle can be calculated using the formula below.

$$R = abc / ((a+b+c)(b+c-a)(c+a-b)(a+b-c))^{1/2}$$

A curvature ρ at the object candidate point pc is calculated as a reciprocal of the radius R (ρ=1/R).

The boundary-position-candidate extraction unit 21 may calculate a normal vector of the approximate curve L at each of the object candidate points in place of a curvature ρ. The boundary-position-candidate extraction unit 21 may extract a position at which the amount of change in direction of the normal vector exceeds a predetermined value as a boundary position candidate.

FIG. 4A is now referred to. The partial-region extraction unit 22 executes image recognition processing on a captured image captured by the camera 14 and recognizes a person captured in the captured image . The partial-region extraction unit 22 extracts a partial region R in which a person is detected by the image recognition processing.

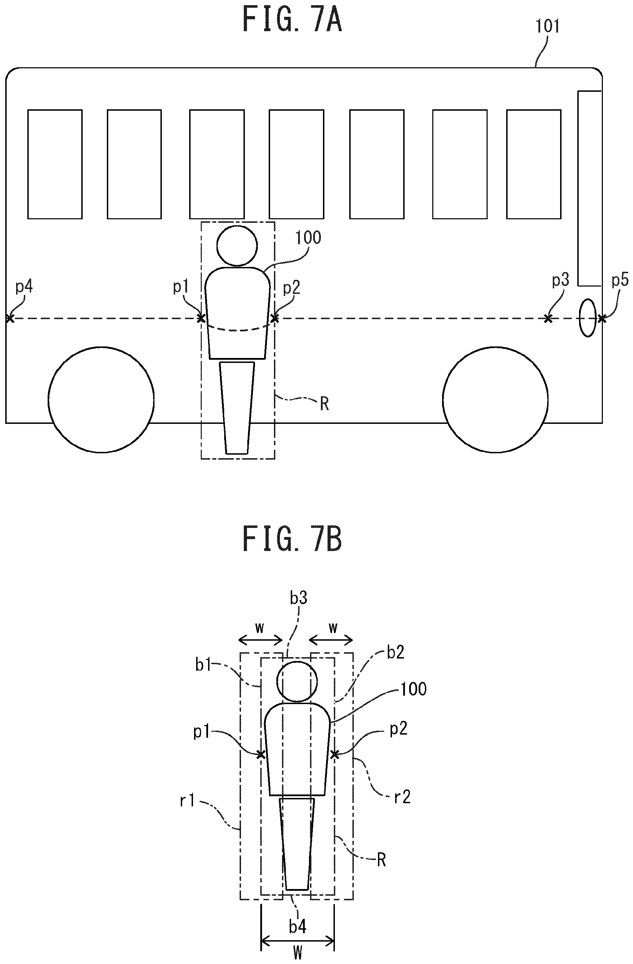

In FIG. 7A, an example of a captured image captured by the camera 14 is illustrated. The partial-region extraction unit 22, for example, extracts a rectangular region enclosing a recognized person (pedestrian 100) as a partial region R.

In addition, for example, the partial-region extraction unit 22 may extract an assembly of pixels that the detected person occupies, that is, pixels to which an attribute indicating a person is given, as a partial region R. In this case, the partial-region extraction unit 22 calculates a contour line enclosing these pixels.

FIG. 4A is now referred to. The comparison unit 23 projects the boundary position candidates p1 to p5, which the boundary-position-candidate extraction unit 21 has extracted, into an image coordinate system of the captured image captured by the camera 14, based on mounting positions and attitudes of the camera 14 and the range sensor 15 and internal parameters (an angle of view and the like) of the camera 14. That is, the comparison unit 23 converts the coordinates of the boundary position candidates p1 to p5 to coordinates in the image coordinate system.

The comparison unit 23 determines whether or not the position of any one of the boundary position candidates p1 to p5 in the main-scanning direction coincides with one of the boundary positions of the partial region R, in the image (in the image coordinate system) .

The comparison unit 23 determines whether or not the position of a boundary position candidate coincides with a boundary position of the partial region R, using, for example, the following method. FIG. 7B is now referred to.

The comparison unit 23 sets boundary regions r1 and r2 that include boundary lines b1 and b2 crossing the main-scanning direction among the boundary lines of the partial region R, respectively.

It is now assumed that the partial region R is a rectangle and, among four sides of the rectangle, a pair of sides crossing the main-scanning direction are boundary lines b1 and b2 and the other sides are boundary lines b3 and b4.

The comparison unit 23 may, for example, set a region of width w with the boundary line b1 as the central axis as a boundary region r1 and set a region of width w with the boundary line b2 as the central axis as a boundary region r2.

The comparison unit 23 may set the boundary regions r1 and r2 in such a way that the sum of the width w of the boundary region r1 and the width w of the boundary region r2 is, for example, equal to the width W (length of the boundary line b3 or b4) of the partial region R. In this case, the boundary region r1 is a region that is obtained by offsetting the partial region R by W/2 in the leftward direction in FIG. 7B, and the boundary region r2 is a region that is obtained by offsetting the partial region R by W/2 in the rightward direction in FIG. 7B.

Alternatively, the comparison unit 23 may, for example, divide the partial region R by a line connecting the center of the boundary line b3 and the center of the boundary line b4, and set a region on the boundary line b1 side as the boundary region r1 and set a region on the boundary line b2 side as the boundary region r2. In this case, the boundary region r1 is the left half region of the partial region R in FIG. 7B, and the boundary region r2 is the right half region of the partial region R in FIG. 7B.

When any one of the boundary position candidates is included in each of the boundary regions r1 and r2, the comparison unit 23 determines that the boundary position candidates coincide with the boundary positions of the partial region R. In this case, the comparison unit 23 recognizes that a pedestrian exists in the partial region R.

On the other hand, when no boundary position candidate is included in both of the boundary regions r1 and r2, or when no boundary position candidate is included in either of the boundary regions r1 and r2, the comparison unit 23 determines that the boundary position candidates do not coincide with the boundary positions of the partial region R. In this case, the comparison unit 23 recognizes that no pedestrian exists in the partial region R.

When the comparison unit 23 recognizes that a pedestrian exists in the partial region R, the object recognition unit 24 projects the group of object candidate points extracted by the object-candidate-point-group extraction unit 20 (that is, the group of object candidate points before thinning-out) into the image coordinate system of the captured image.

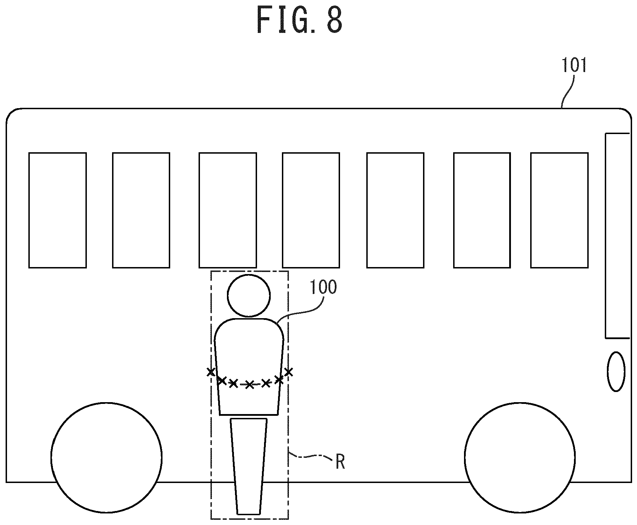

The object recognition unit 24 extracts a group of object candidate points included in the partial region R, as illustrated in FIG. 8 and recognizes the group of object candidate points as a group of points associated with the pedestrian 100. The object recognition unit 24 calculates a shape, such as a circle, a rectangle, a cube, and a cylinder, that include the extracted group of points and recognizes the calculated shape as the pedestrian 100. The object recognition unit 24 outputs a recognition result to the travel control unit 12.

When the object recognition unit 24 recognizes the pedestrian 100, the travel control unit 12 determines whether or not a planned travel track of the own vehicle 1 interferes with the pedestrian 100. When the planned travel track of the own vehicle 1 interferes with the pedestrian 100, the travel control unit 12, by driving the actuators 13, controls at least one of the steering direction or the amount of steering of the steering mechanism, accelerator opening, and braking force of the braking device of the own vehicle 1 in such a way that the own vehicle 1 travels avoiding the pedestrian 100.

(Operation)

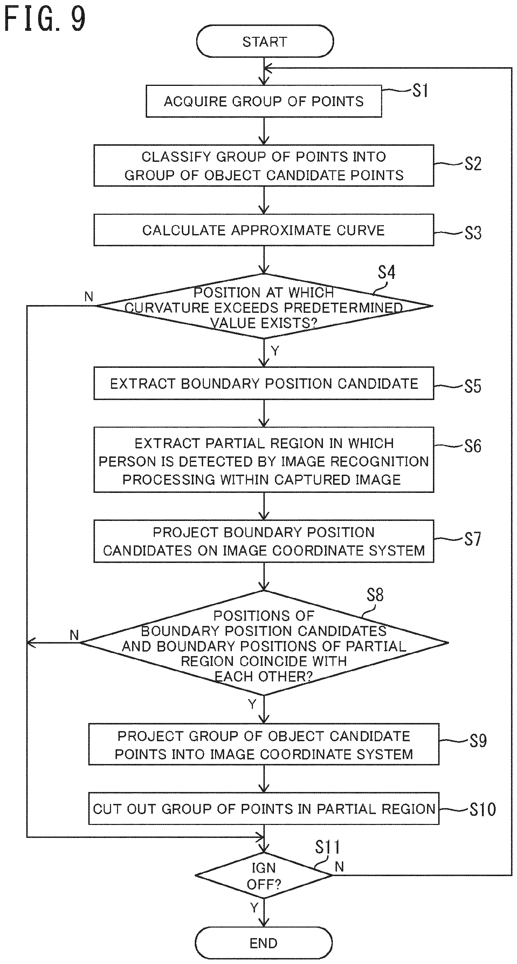

Next, an example of operation of the vehicle control device 2 in the first embodiment will be described with reference to FIG. 9.

In step S1, the range sensor 15 detects a plurality of positions on surfaces of objects in the surroundings of the own vehicle 1 in a predetermined direction and acquires a group of points.

In step S2, the object-candidate-point-group extraction unit 20 groups points in the group of points acquired from the range sensor 15 and classifies the points into groups of object candidate points.

In step S3, the boundary-position-candidate extraction unit 21, by thinning out a group of object candidate points extracted by the object-candidate-point-group extraction unit 20, simplifies the group of object candidate points. The boundary-position-candidate extraction unit 21 calculates an approximate curve by approximating the simplified group of object candidate points by a curve.

In step S4, the boundary-position-candidate extraction unit 21 calculates a curvature $\rho$ of the approximate curve at each of the object candidate points. The boundary-position-candidate extraction unit 21 determines whether or not there exists a position at which the curvature ρ exceeds a predetermined curvature. When there exists a position at which the curvature ρ exceeds the predetermined curvature (step S4: Y), the process proceeds to step S5. When there exists no position at which the curvature ρ exceeds the predetermined curvature (step S4: N), the process proceeds to step S11.

In step S5, the boundary-position-candidate extraction unit 21 extracts a position at which the curvature ρ exceeds the predetermined curvature as a boundary position candidate.

In step S6, the partial-region extraction unit 22 executes image recognition processing on a captured image captured by the camera 14 and extracts a partial region in which a person is detected within the captured image.

In step S7, the comparison unit 23 projects boundary position candidates that the boundary-position-candidate extraction unit 21 has extracted into an image coordinate system of the captured image captured by the camera 14.

In step S8, the comparison unit 23 determines whether or not a boundary position candidate coincides with a boundary position of the partial region in the main-scanning direction in the image coordinate system. When a boundary position candidate coincides with a boundary position of the partial region (step S8: Y), the comparison unit 23 recognizes that a pedestrian exists in the partial region and causes the process to proceed to step S9. When no boundary position candidate coincides with a boundary position of the partial region (step S8: N), the comparison unit 23 recognizes that no pedestrian exists in the partial region and causes the process to proceed to step S11.

In step S9, the object recognition unit 24 projects the group of object candidate points extracted by the object-candidate-point-group extraction unit 20 into the image coordinate system of the captured image.

In step S10, the object recognition unit 24 cuts out a group of object candidate points included in the partial region and recognizes the group of object candidate points as the pedestrian 100.

In step S11, the object recognition controller 11 determines whether or not an ignition switch (IGN) of the own vehicle 1 has been turned off. When the ignition switch has not been turned off (step S11: N), the process returns to step S1. When the ignition switch has been turned off (step S11: Y), the process is terminated.

(Advantageous Effects of First Embodiment)

(1) The range sensor 15 detects a plurality of positions on surfaces of objects in the surroundings of the own vehicle 1 along a predetermined main-scanning direction and acquires a group of points . The camera 14 generates a captured image of the surroundings of the own vehicle 1. The object-candidate-point-group extraction unit 20 groups points in the acquired group of points and classifies the points into groups of object candidate points. The boundary-position-candidate extraction unit 21 extracts, from among points included in a group of object candidate points, a position at which change in distance from the own vehicle 1 between adjacent object candidate points in the main-scanning direction increases from a value equal to or less than a predetermined threshold value to a value greater than the predetermined threshold value as a boundary position candidate that is a candidate of a boundary position of an object in the main-scanning direction, the boundary position being an outer end position. The partial-region extraction unit 22 extracts a partial region in which a person is detected in the captured image, within the captured image by image recognition processing. When, in the captured image, the position of a boundary position candidate coincides with a boundary position of the partial region, the comparison unit 23 recognizes that a pedestrian exists in the partial region.

This configuration enables whether or not a solid object exists in the partial region in which a person is detected by image recognition processing to be determined and, when a solid object exists in the partial region, the solid object to be recognized as a pedestrian. This capability enables whether or not a group of points detected by the range sensor 15 is a pedestrian to be accurately determined. In addition, it is possible to prevent an image of a person drawn on an object or a passenger on board a vehicle from being falsely detected as a pedestrian. Consequently, it is possible to improve detection precision of a pedestrian existing in the surroundings of the own vehicle.

(2) When the position of a boundary position candidate coincides with a boundary position of the partial region, the object recognition unit 24 may recognize, as a pedestrian, a group of points located in the partial region among a group of object candidate points projected into the image coordinate system of the captured image.

When a group of points corresponding to a pedestrian is likely to be included in a grouped group of object candidate points, this configuration enables the group of points to be cut out.

(3) The boundary-position-candidate extraction unit 21 may extract a position at which the curvature of an approximate curve calculated from the group of object candidate points exceeds a predetermined value as a boundary position candidate.

Detecting a position at which the curvature of the approximate curve of the group of object candidate points becomes large as described above enables a boundary position of an object to be detected with high precision.

(4) The range sensor 15 may be a sensor that emits outgoing waves for ranging and scans the surroundings of the own vehicle 1 in the main-scanning direction. This configuration enables the position of an object in the surroundings of the own vehicle 1 to be detected with high precision.

(5) The range sensor 15 may acquire a group of points by scanning the surroundings of the own vehicle 1 in the main-scanning direction with outgoing waves with respect to each layer that is determined in a corresponding manner to an emission angle in the vertical direction of the outgoing waves for ranging. The boundary-position-candidate extraction unit 21 may extract a boundary position candidate by calculating an approximate curve with respect to each layer. This configuration enables a boundary position candidate to be extracted with respect to each layer.

(6) The vehicle control device 2 may include a stereo camera 18 as a constituent element that has a function equivalent to that of a combination of the range sensor 15 and the camera 14. The stereo camera 18 generates stereo images of the surroundings of the own vehicle 1 and detects positions on surfaces of objects in the surroundings of the own vehicle 1 as a group of points from the generated stereo images.

This configuration enables both a group of points and a captured image to be acquired only by the stereo camera 18 without mounting a range sensor using outgoing waves for ranging. It is also possible to prevent positional error between a group of points and a captured image that depends on attachment precision of the range sensor 15 and the camera 14.

(Second Embodiment)

Next, a second embodiment will be described. A range sensor 15 of the second embodiment performs sub-scanning by changing an emission angle in the vertical direction of a laser beam and scans a plurality of layers the emission angles of which in the vertical direction are different from one another.

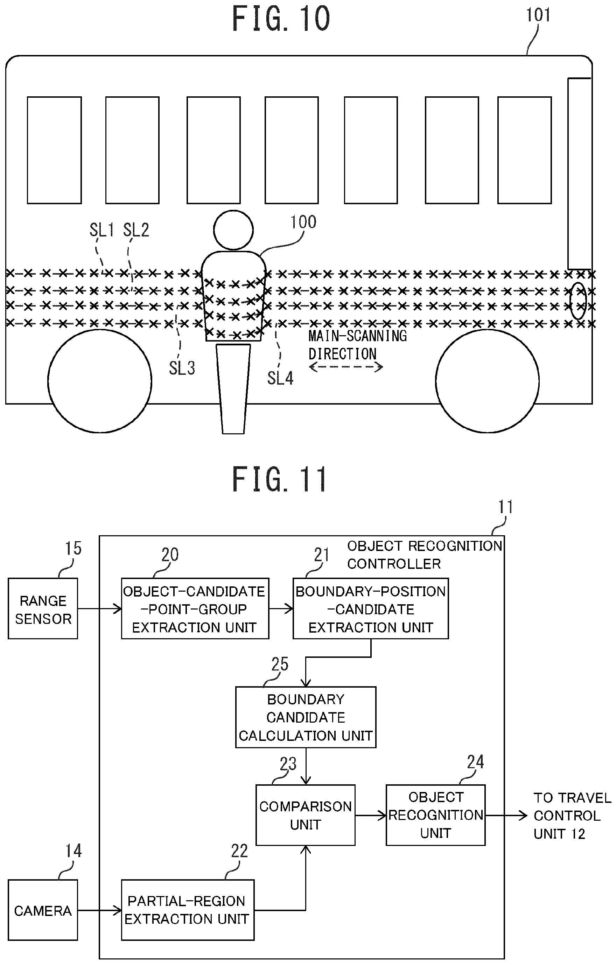

FIG. 10 is now referred to. The range sensor 15 scans objects 100 and 101 in the surroundings of an own vehicle 1 along four main-scanning lines and acquires a group of points in each of four layers SL1, SL2, SL3, and SL4.

FIG. 11 is now referred to. An object recognition controller 11 of the second embodiment has a similar configuration to the configuration of the object recognition controller 11 of the first embodiment, which was described with reference to FIG. 4A, and descriptions of the same functions will be omitted. The object recognition controller 11 of the second embodiment includes a boundary candidate calculation unit 25.

Note that, in the second embodiment, a stereo camera 18 can also be used in place of the range sensor 15 and a camera 14, as with the first embodiment.

An object-candidate-point-group extraction unit 20 classifies a group of points acquired from one of the plurality of layers SL1 to SL4 into groups of object candidate points with respect to each layer by similar processing to that in the first embodiment.

A boundary-position-candidate extraction unit 21 extracts a boundary position candidate with respect to each layer by similar processing to that in the first embodiment.

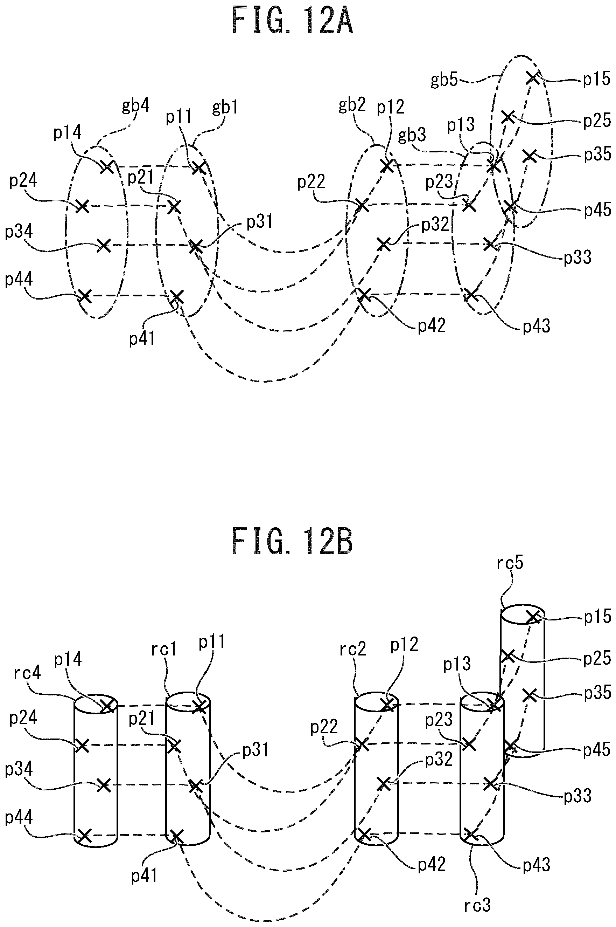

FIG. 12A is now referred to. For example, the boundary-position-candidate extraction unit 21 extracts boundary position candidates p11 to p15 in the layer SL1, boundary position candidates p21 to p25 in the layer SL2, boundary position candidates p31 to p35 in the layer SL3, and boundary position candidates p41 to p45 in the layer SL4.

FIG. 11 is now referred to. The boundary candidate calculation unit 25, by grouping boundary position candidates in the plurality of layers according to degrees of proximity, classifies the boundary position candidates into groups of boundary position candidates. That is, the boundary candidate calculation unit 25 determines that boundary position candidates that are in proximity to one another across the plurality of layers are boundary positions of a boundary detected in the plurality of layers and classifies the boundary position candidates in an identical group of boundary position candidates.

Specifically, the boundary candidate calculation unit 25 calculates intervals between boundary position candidates in layers adjacent to each other among boundary position candidates in the plurality of layers and classifies boundary position candidates having shorter intervals than a predetermined value in the same group of boundary position candidates.

FIG. 12A is now referred to. Since the boundary position candidates p11 and p21 in the layers SL1 and SL2, which are adjacent to each other, are in proximity to each other and have a shorter interval than the predetermined value, the boundary candidate calculation unit 25 classifies p11 and p21 in an identical boundary position candidate group gb1. In addition, since the boundary position candidates p21 and p31 in the layers SL2 and SL3, which are adjacent to each other, are in proximity to each other and have a shorter interval than the predetermined value, the boundary candidate calculation unit 25 also classifies the boundary position candidate p31 in the boundary position candidate group gb1. Further, since the boundary position candidates p31 and p41 in the layers SL3 and SL4, which are adjacent to each other, are in proximity to each other and have a shorter interval than the predetermined value, the boundary candidate calculation unit 25 also classifies the boundary position candidate p41 in the boundary position candidate group gb1.

In this way, the boundary candidate calculation unit 25 classifies the boundary position candidates p11, p21, p31, and p41 in the identical boundary position candidate group gb1.

In a similar manner, the boundary candidate calculation unit 25 classifies the boundary position candidates p12, p22, p32, and p42 in an identical boundary position candidate group gb2. The boundary candidate calculation unit 25 classifies the boundary position candidates p13, p23, p33, and p43 in an identical boundary position candidate group gb3. The boundary candidate calculation unit 25 classifies the boundary position candidates p14, p24, p34, and p44 in an identical boundary position candidate group gb4. The boundary candidate calculation unit 25 classifies the boundary position candidates p15, p25, p35, and p45 in an identical boundary position candidate group gb5.

The boundary candidate calculation unit 25 calculates columnar inclusive regions each of which includes one of the groups of boundary position candidates, as candidates of the boundaries of an object.

FIG. 12B is now referred to. The boundary candidate calculation unit 25 respectively calculates columnar inclusive regions rc1, rc2, rc3, rc4, and rc5 that include the boundary position candidate groups gb1, gb2, gb3, gb4, and gb5, respectively. The shapes of the inclusive regions rc1 to rc5 do not have to be round columns, and the boundary candidate calculation unit 25 may calculate a columnar inclusive region having an appropriate shape, such as a triangular prism and a quadrangular prism.

FIG. 11 is now referred to. A comparison unit 23 projects the inclusive regions, which the boundary candidate calculation unit 25 has calculated, into an image coordinate system of a captured image captured by the camera 14. The comparison unit 23 determines whether or not any one of the inclusive regions rc1 to rc5 overlaps one of boundary regions r1 and r2 of a partial region R.

When each of the boundary regions r1 and r2 overlaps any one of the inclusive regions rc1 to rc5, the comparison unit 23 recognizes that a pedestrian exists in the partial region R. On the other hand, when neither the boundary region r1 nor r2 overlaps any of the inclusive regions rc1 to rc5 or when either of the boundary regions r1 and r2 does not overlap any of the inclusive regions rc1 to rc5, the comparison unit 23 recognizes that no pedestrian exists in the partial region R.

When the comparison unit 23 recognizes that a pedestrian exists in the partial region R, an object recognition unit 24 projects the groups of object candidate points in the plurality of layers extracted by the object-candidate-point-group extraction unit 20 (that is, the groups of object candidate points before thinning-out) into the image coordinate system of the captured image.

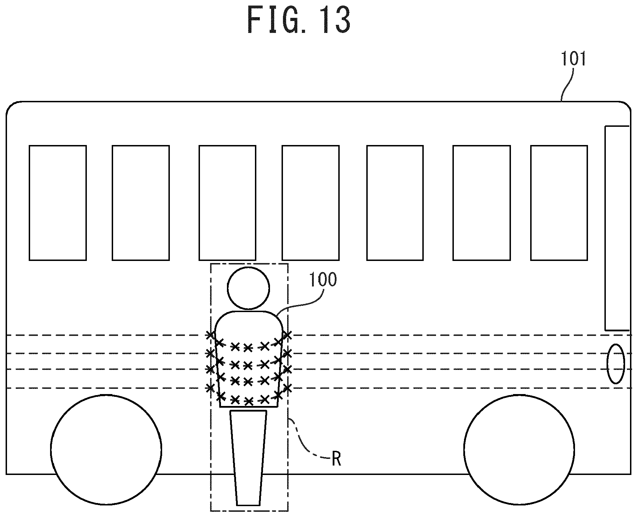

The object recognition unit 24 extracts groups of object candidate points in the plurality of layers included in the partial region R, as illustrated in FIG. 13 and recognizes the groups of object candidate points as a group of points associated with the pedestrian 100. The object recognition unit 24 calculates a shape, such as a circle, a rectangle, a cube, and a cylinder, that includes the extracted group of points and recognizes the calculated shape as the pedestrian 100. The object recognition unit 24 outputs a recognition result to a travel control unit 12.

(Operation)

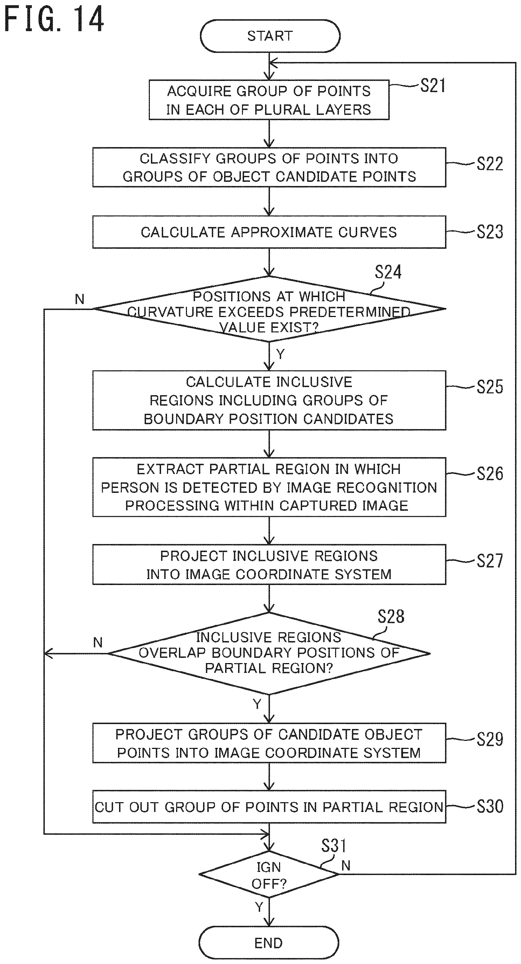

Next, an example of operation of a vehicle control device 2 in the second embodiment will be described with reference to FIG. 14. In step S21, the range sensor 15 scans a plurality of layers that have different emission angles in the vertical direction and acquires a group of points in each of the plurality of layers.

In step S22, the object-candidate-point-group extraction unit 20 classifies a group of points acquired from one of the plurality of layers into groups of object candidate points with respect to each layer.

In step S23, the boundary-position-candidate extraction unit 21 calculates an approximate curve of a group of object candidate points with respect to each layer.

In step S24, the boundary-position-candidate extraction unit 21 calculates curvature $\rho$ of the approximate curve. The boundary-position-candidate extraction unit 21 determines whether or not there exists a position at which the curvature $\rho$ exceeds a predetermined value. When there exists a position at which the curvature $\rho$ exceeds the predetermined value (step S24: Y), the process proceeds to step S25. When there exists no position at which the curvature $\rho$ exceeds the predetermined value (step S24: N), the process proceeds to step S31.

In step S25, the boundary-position-candidate extraction unit 21 extracts a boundary position candidate with respect to each layer. The boundary candidate calculation unit 25, by grouping boundary position candidates in the plurality of layers according to degrees of proximity, classifies the boundary position candidates into groups of boundary position candidates. The boundary candidate calculation unit 25 calculates columnar inclusive regions each of which includes one of the groups of boundary position candidates, as candidates of boundaries of an object.

Processing in step S26 is the same as the processing in step S6, which was described with reference to FIG. 9.

In step S27, the comparison unit 23 projects the inclusive regions, which the boundary candidate calculation unit 25 has calculated, into an image coordinate system of a captured image captured by the camera 14.

In step S28, the comparison unit 23 determines whether or not an inclusive region overlaps a boundary region of the partial region. When an inclusive region overlaps a boundary region of the partial region (step S28: Y), the comparison unit 23 recognizes that a pedestrian exists in the partial region and causes the process to proceed to step S29. When no inclusive region overlaps a boundary region of the partial region (step S28: N), the comparison unit 23 recognizes that no pedestrian exists in the partial region and causes the process to proceed to step S31.

Processing in steps S29 to S31 is the same as the processing in steps S9 to S11, which was described with reference to FIG. 9.

(Variations of Second Embodiment)

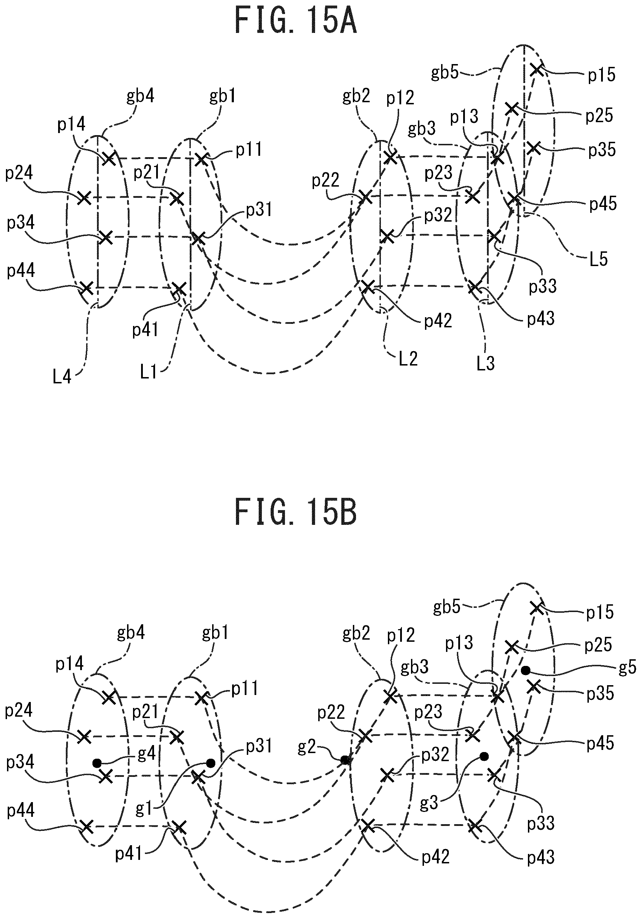

(1) FIG. 15A is now referred to. The boundary candidate calculation unit 25 may calculate approximate straight lines L1 to L5 of the boundary position candidate groups gb1 to gb5 in place of the inclusive regions rc1 to rc5. The comparison unit 23 projects the approximate straight lines L1 to L5, which the boundary candidate calculation unit 25 has calculated, into the image coordinate system of the captured image captured by the camera 14. The comparison unit 23 determines whether or not any one of the approximate straight lines L1 to L5 coincides with one of the boundary positions of the partial region R.

When any one of the approximate straight lines L1 to L5 is included in each of the boundary regions r1 and r2 of the partial region R, the comparison unit 23 determines that the positions of approximate straight lines coincide with the boundary positions of the partial region R. In this case, the comparison unit 23 recognizes that a pedestrian exists in the partial region R.

On the other hand, when none of the approximate straight lines L1 to L5 is included in both of the boundary regions r1 and r2, or when none of the approximate straight lines L1 to L5 is included in either of the boundary regions r1 and r2, the comparison unit 23 determines that the positions of the approximate straight lines do not coincide with the boundary positions of the partial region R. In this case, the comparison unit 23 recognizes that no pedestrian exists in the partial region R.

(2) FIG. 15B is now referred to. The boundary candidate calculation unit 25 may calculate centroids g1 to g5 of the boundary position candidate groups gb1 to gb5 in place of the inclusive regions rc1 to rc5. The comparison unit 23 projects the centroids g1 to g5, which the boundary candidate calculation unit 25 has calculated, into the image coordinate system of the captured image captured by the camera 14. The comparison unit 23 determines whether or not any one of the centroids g1 to g5 coincides with one of the boundary positions of the partial region R.

When any one of the centroids g1 to g5 is included in each of the boundary regions r1 and r2 of the partial region R, the comparison unit 23 determines that the positions of centroids coincide with the boundary positions of the partial region R. In this case, the comparison unit 23 recognizes that a pedestrian exists in the partial region R.

On the other hand, when none of the centroids g1 to g5 is included in both of the boundary regions r1 and r2, or when none of the centroids g1 to g5 is included in either of the boundary regions r1 and r2, the comparison unit 23 determines that the positions of the centroids do not coincide with the boundary positions of the partial region R. In this case, the comparison unit 23 recognizes that no pedestrian exists in the partial region R.

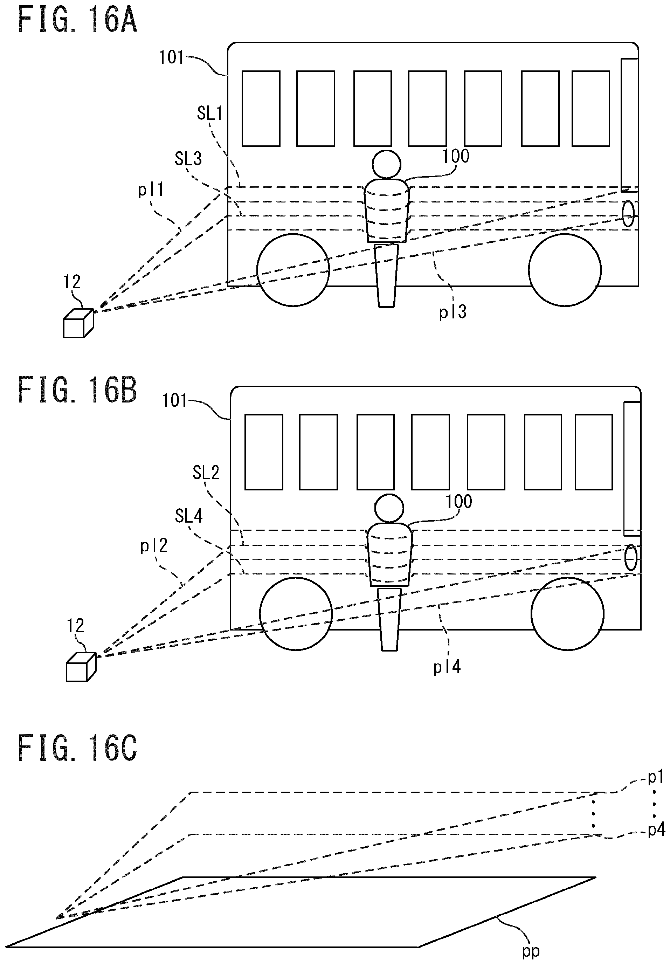

(3) FIGS. 16A, 16B, and 16C are now referred to. The boundary-position-candidate extraction unit 21 may extract a boundary position candidate by projecting groups of object candidate points in the plurality of layers SL1 to SL4 onto an identical two-dimensional plane pp and calculating an approximate curve from the groups of object candidate points projected onto the two-dimensional plane pp. This configuration enables boundary position candidates to be treated in a similar manner to the first embodiment, in which a single layer is scanned, and the amount of calculation to be reduced. It is also possible to omit the boundary candidate calculation unit 25.

In this variation, when a plane that is perpendicular to the optical axis direction of a laser beam is set as the two-dimensional plane pp, points having different coordinate values in the depth direction (the optical axis direction of the laser beam) are projected to the same coordinates in the two-dimensional plane pp and position information in the depth direction of groups of object candidate points disappears, which makes it impossible to calculate curvature $\rho$. Therefore, it is desirable to set the two-dimensional plane pp as described below.

Planes pl1 and pl3 in FIG. 16A are trajectory planes that are obtained as trajectories of the optical axis of a laser beam in scans in the main-scanning direction in the layers SL1 and SL3, respectively. Planes pl2 and pl4 in FIG. 16B are trajectory planes that are obtained as trajectories of the optical axis of a laser beam in scans in the main-scanning direction in the layers SL2 and SL4, respectively.

The two-dimensional plane pp is preferably set in such a way as not to be perpendicular to the trajectory planes pl1 to pl4. The two-dimensional plane pp is more preferably set in such a way as to be substantially in parallel with the trajectory planes pl1 to pl4.

(4) A plurality of two-dimensional planes onto which groups of object candidate points in a plurality of layers are projected may be set, and groups of object candidate points that have different heights may be projected onto different two-dimensional planes.

For example, a plurality of height ranges, such as a first height range that includes groups of object candidate points in the layers SL1 and SL2 and a second height range that includes groups of object candidate points in the layers SL3 and SL4 in FIGS. 16A and 16B, may be set.

The boundary-position-candidate extraction unit 21 may project groups of object candidate points in the first height range onto an identical two-dimensional plane and project groups of object candidate points in the second height range onto an identical two-dimensional plane, and thereby project the groups of object candidate points in the first height range and the groups of object candidate points in the second height range onto different two-dimensional planes.

(Advantageous Effects of Second Embodiment)

(1) The range sensor 15 may acquire a group of points by scanning the surroundings of the own vehicle 1 in a predetermined direction with outgoing waves with respect to each of a plurality of layers that have different emission angles in the vertical direction of the outgoing waves for ranging. The boundary-position-candidate extraction unit 21 may extract a boundary position candidate by projecting groups of object candidate points in a plurality of layers onto an identical two-dimensional plane pp and calculating an approximate curve from the groups of object candidate points projected onto the two-dimensional plane pp. The two-dimensional plane pp is preferably set in such a way as not to be perpendicular to the planes pl1 to pl4, which are obtained as trajectories of the emission axis of outgoing waves in scans in the main-scanning direction.

Projecting the groups of object candidate points in the plurality of layers onto the identical two-dimensional plane pp as described above enables the amount of calculation of approximate curves to be reduced.

(2) A plurality of height ranges may be set, and groups of object candidate points that have different heights may be projected onto different two-dimensional planes. For example, groups of object candidate points in an identical height range may be projected onto an identical two-dimensional plane, and groups of object candidate points in different height ranges may be projected onto different two-dimensional planes.

When, in the case where a large number of layers are defined, groups of points in all the layers are projected onto an identical two-dimensional plane, variation of coordinates projected onto the two-dimensional plane becomes large and an approximate curve is smoothed. Thus, performing curve approximation by projecting groups of object candidate points onto a different two-dimensional plane with respect to each of regularly spaced height ranges enables smoothing of an approximate curve to be suppressed.

(3) The boundary candidate calculation unit 25 may classify boundary position candidates into groups of boundary position candidates by grouping adjacent boundary position candidates and calculate centroids of the groups of boundary position candidates. When the position of a centroid coincides with a boundary position of the partial region, the comparison unit 23 may recognize that a pedestrian exists in the partial region.

This configuration enables the amount of calculation required for comparison between boundary position candidates detected in a plurality of layers and the boundary positions of the partial region to be reduced.

(4) The boundary candidate calculation unit 25 may classify boundary position candidates into groups of boundary position candidates by grouping adjacent boundary position candidates and calculate approximate straight lines from the groups of boundary position candidates. When the position of an approximate straight line coincides with a boundary position of the partial region, the comparison unit 23 may recognize that a pedestrian is located in the partial region.

This configuration enables the amount of calculation required for comparison between boundary position candidates detected in a plurality of layers and the boundary positions of the partial region to be reduced.

(5) The boundary candidate calculation unit 25 may classify boundary position candidates into groups of boundary position candidates by grouping adjacent boundary position candidates and calculate inclusive regions that are regions respectively including the groups of boundary position candidates. When an inclusive region overlaps a boundary region of the partial region, the comparison unit 23 may recognize that a pedestrian is located in the partial region.

This configuration enables the amount of calculation required for comparison between boundary position candidates detected in a plurality of layers and the boundary positions of the partial region to be reduced.

Reference Signs List

| | |
|---|---|
| 1 | Own vehicle |
| 2 | Vehicle control device |
| 10 | Object sensor |
| 11 | Object recognition controller |
| 12 | Travel control unit |
| 13 | Actuator |
| 14 | Camera |
| 15 | Range sensor |
| 16 | Processor |
| 17 | Storage device |
| 18 | Stereo camera |
| 20 | Object-candidate-point-group extraction unit |
| 21 | Boundary-position-candidate extraction unit |
| 22 | Partial-region extraction unit |
| 23 | Comparison unit |
| 24 | Object recognition unit |
| 25 | Boundary candidate calculation unit |

**Claims**

1. An object recognition method comprising:

   detecting (S1) a plurality of positions on surfaces of objects in surroundings of an own vehicle along a predetermined direction and acquiring a group of points;
   generating a captured image of surroundings of the own vehicle;
   grouping (S2) points included in the acquired group of points and classifying the points into a group of object candidate points (p1 - p21);
   extracting (S5), from among object candidate points, the object candidate points being points included in the group of object candidate points, a position at which change in distance from the own vehicle between adjacent object candidate points increases from a value equal to or less than a predetermined threshold value to a value greater than the predetermined threshold value as a boundary position candidate (p1, p7, p10, p21), the boundary position candidate being an outer end position of an object;
   extracting (S6) a region in which a person is detected in the captured image as a partial region (R) by image recognition processing;
   **characterized by**:

   determining (S8) whether or not, in the captured image, a position of any of the boundary position candidates in the predetermined direction coincides with a boundary position of the partial region, the boundary position being an outer end position of the partial region;
   when the position of the boundary position candidate coincides with the boundary position of the partial region, recognizing (S10) that a pedestrian exists in the partial region; and recognizing, as the pedestrian, a group of points located in the partial region among the group of object candidate points projected into an image coordinate system of the captured image.

2. The object recognition method according to claim 1, wherein the method extracts a position at which curvature of an approximate curve calculated from the group of object candidate points exceeds a predetermined value as the boundary position candidate.

3. The object recognition method according to claim 2, wherein

   the method acquires the group of points by scanning surroundings of the own vehicle in the predetermined direction with outgoing waves for ranging with respect to each of layers determined in a corresponding manner to emission angles in a vertical direction of the outgoing waves, and
   the method calculates the approximate curve and extracts the boundary position candidate with respect to each of the layers.

4. The object recognition method according to claim 2, wherein

the method acquires the group of points by scanning surroundings of the own vehicle in the predetermined direction with outgoing waves for ranging with respect to each of a plurality of layers having different emission angles in a vertical direction of the outgoing waves,

the method extracts the boundary position candidate by projecting the groups of object candidate points in the plurality of layers onto an identical two-dimensional plane and calculating the approximate curve from the groups of object candidate points projected onto the two-dimensional plane, and

the two-dimensional plane is a plane not perpendicular to a plane obtained as a trajectory of an emission axis of the outgoing waves in a scan in the predetermined direction.

5.  The object recognition method according to claim 4, wherein

the method sets a plurality of height ranges, and

the method projects the group of object candidate points in an identical height range onto an identical two-dimensional plane and projects the groups of object candidate points in different height ranges onto different two-dimensional planes.

6.  The object recognition method according to any one of claims 1 and 2 to 5 comprising:

grouping adjacent boundary position candidates and classifying the boundary position candidates into a group of boundary position candidates; and

calculating a centroid of the group of boundary position candidates,

wherein, when a position of the centroid coincides with a boundary position of the partial region, the method recognizes that a pedestrian exists in the partial region.

7.  The object recognition method according to any one of claims 1 and 2 to 5 comprising:

grouping adjacent boundary position candidates and classifying the boundary position candidates into a group of boundary position candidates; and

calculating an approximate straight line from the group of boundary position candidates,

wherein, when a position of the approximate straight line coincides with a boundary position of the partial region, the method recognizes that a pedestrian exists in the partial region.

8.  The object recognition method according to any one of claims 1 and 2 to 5 comprising:

grouping adjacent boundary position candidates and classifying the boundary position candidates into a group of boundary position candidates; and

calculating an inclusive region, the inclusive region being a region including the group of boundary position candidates,

wherein, when the inclusive region overlaps a boundary region of the partial region, the method recognizes that a pedestrian is located in the partial region.

9.  An object recognition device (2) comprising:

a sensor (15) configured to detect a plurality of positions on surfaces of objects in surroundings of an own vehicle along a predetermined direction and acquire a group of points;

a camera (14) configured to generate a captured image of surroundings of the own vehicle; and

a controller (11) configured to group points included in the acquired group of points and classify the points into a group of object candidate points (p1 - p21), extract, from among object candidate points, the object candidate points being points included in the group of object candidate points, a position at which change in distance from the own vehicle between adjacent object candidate points increases from a value equal to or less than a predetermined threshold value to a value greater than the predetermined threshold value as a boundary position candidate (p1, p7, p10, p21), the boundary position candidate being an outer end position of an object, extract a region in which a person is detected in the captured image as a partial region (R) by image recognition processing **characterized in that** the controller (11) is configured to:

determine whether or not, in the captured image, a position of any of the boundary position candidates in the predetermined direction coincides with a boundary position of the partial region, the boundary position being an outer end position of the partial region;

when the position of the boundary position candidate coincides with the boundary position of the partial region, recognize that a pedestrian exists in the partial region, and recognize, as the pedestrian, a group of points located in the partial region among the group of object candidate points projected into an image coordinate system of the captured image.

10. The object recognition device according to claim 9, wherein the sensor is a range sensor configured to emit outgoing waves for ranging and scan surroundings of the own vehicle in the predetermined direction.

**Patentansprüche**

1. Objekterkennungsverfahren, umfassend:

Ermitteln (S1) einer Vielzahl von Positionen auf Oberflächen von Objekten in der Umgebung eines eigenen Fahrzeugs entlang einer vorgegebenen Richtung und Erfassen einer Gruppe von Punkten;
Erzeugen eines aufgenommenen Bildes der Umgebung des eigenen Fahrzeugs;
Gruppieren (S2) der in der erfassten Gruppe von Punkten enthaltenen Punkte und Klassifizieren der Punkte in eine Gruppe von Objektkandidatenpunkten (p1 - p21);
Extrahieren (S5), aus den Objektkandidatenpunkten, wobei die Objektkandidatenpunkte Punkte sind, die in der Gruppe der Objektkandidatenpunkte enthalten sind, einer Position, an der eine Abstandsänderung von dem eigenen Fahrzeug zwischen benachbarten Objektkandidatenpunkten von einem Wert, der gleich oder kleiner als ein vorgegebener Schwellenwert ist, auf einen Wert zunimmt, der größer als der vorgegebene Schwellenwert ist, als einen Grenzpositionskandidaten (p1, p7, p10, p21), wobei der Grenzpositionskandidat eine äußere Endposition eines Objekts ist;
Extrahieren (S6) eines Bereichs, in dem eine Person in dem aufgenommenen Bild erkannt wird, als Teilbereich (R) durch Bilderkennungsverarbeitung;
**gekennzeichnet durch:**

Bestimmen (S8), ob in dem aufgenommenen Bild eine Position eines der Grenzpositionskandidaten in der vorgegebenen Richtung mit einer Grenzposition des Teilbereichs übereinstimmt oder nicht, wobei die Grenzposition eine äußere Endposition des Teilbereichs ist;
wenn die Position des Grenzpositionskandidaten mit der Grenzposition des Teilbereichs übereinstimmt, Erkennen (S10), dass ein Fußgänger in dem Teilbereich vorhanden ist; und
Erkennen, als den Fußgänger, einer Gruppe von Punkten, die sich in dem Teilbereich befinden, aus der Gruppe von Objektkandidatenpunkten, die in ein Bildkoordinatensystem des aufgenommenen Bildes projiziert werden.

2. Objekterkennungsverfahren nach Anspruch 1, wobei das Verfahren eine Position, an der die Krümmung einer aus der Gruppe der Objektkandidatenpunkte berechneten Näherungskurve einen vorgegebenen Wert überschreitet, als Grenzpositionskandidat extrahiert.

3. Objekterkennungsverfahren nach Anspruch 2, wobei

das Verfahren die Gruppe von Punkten durch Abtasten der Umgebung des eigenen Fahrzeugs in der vorgegebenen Richtung mit ausgehenden Wellen zur Entfernungsmessung in Bezug auf jede der Schichten erfasst, die in einer den Emissionswinkeln in einer vertikalen Richtung der ausgehenden Wellen entsprechenden Weise bestimmt werden, und
das Verfahren die Näherungskurve berechnet und den Grenzpositionskandidaten in Bezug auf jede der Schichten extrahiert.

4. Objekterkennungsverfahren nach Anspruch 2, wobei

das Verfahren die Gruppe von Punkten durch Abtasten der Umgebung des eigenen Fahrzeugs in der vorgegebenen Richtung mit ausgehenden Wellen zur Entfernungsmessung in Bezug auf jede einer Vielzahl von Schichten mit unterschiedlichen Emissionswinkeln in einer vertikalen Richtung der ausgehenden Wellen erfasst,
das Verfahren den Grenzpositionskandidaten extrahiert, indem es die Gruppen von Objektkandidatenpunkten in der Vielzahl von Schichten auf eine identische zweidimensionale Ebene projiziert und die Näherungskurve aus den auf die zweidimensionale Ebene projizierten Gruppen von Objektkandidatenpunkten berechnet, und

die zweidimensionale Ebene eine Ebene ist, die nicht senkrecht zu einer Ebene liegt, die als Trajektorie einer Emissionsachse der ausgehenden Wellen bei einer Abtastung in der vorgegebenen Richtung erhalten wird.

5. Objekterkennungsverfahren nach Anspruch 4, wobei

   das Verfahren eine Vielzahl von Höhenbereichen festlegt, und
   das Verfahren die Gruppe von Objektkandidatenpunkten in einem identischen Höhenbereich auf eine identische zweidimensionale Ebene projiziert und die Gruppen von Objektkandidatenpunkten in unterschiedlichen Höhenbereichen auf unterschiedliche zweidimensionale Ebenen projiziert.

6. Objekterkennungsverfahren nach einem der Ansprüche 1 und 2 bis 5, umfassend:

   Gruppieren benachbarter Grenzpositionskandidaten und Klassifizieren der Grenzpositionskandidaten in eine Gruppe von Grenzpositionskandidaten; und
   Berechnen eines Wellenlängenschwerpunkts der Gruppe von Grenzpositionskandidaten,
   wobei, wenn eine Position des Wellenlängenschwerpunkts mit einer Grenzposition des Teilbereichs übereinstimmt, das Verfahren erkennt, dass ein Fußgänger in dem Teilbereich vorhanden ist.

7. Objekterkennungsverfahren nach einem der Ansprüche 1 und 2 bis 5, umfassend:

   Gruppieren benachbarter Grenzpositionskandidaten und Klassifizieren der Grenzpositionskandidaten in eine Gruppe von Grenzpositionskandidaten; und
   Berechnen einer ungefähr geraden Linie aus der Gruppe von Grenzpositionskandidaten,
   wobei, wenn eine Position der ungefähr geraden Linie mit einer Grenzposition des Teilbereichs übereinstimmt, das Verfahren erkennt, dass ein Fußgänger in dem Teilbereich vorhanden ist.

8. Objekterkennungsverfahren nach einem der Ansprüche 1 und 2 bis 5, umfassend:

   Gruppieren benachbarter Grenzpositionskandidaten und Klassifizieren der Grenzpositionskandidaten in eine Gruppe von Grenzpositionskandidaten; und
   Berechnen eines einschließenden Bereichs, wobei der einschließende Bereich ein Bereich ist, der die Gruppe der Grenzpositionskandidaten einschließt,
   wobei, wenn der einschließende Bereich einen Grenzbereich des Teilbereichs überlappt, das Verfahren erkennt, dass sich ein Fußgänger in dem Teilbereich befindet.

9. Objekterkennungsvorrichtung (2), umfassend:

   einen Sensor (15), der dazu konfiguriert ist, eine Vielzahl von Positionen auf Oberflächen von Objekten in der Umgebung eines eigenen Fahrzeugs entlang einer vorgegebenen Richtung zu ermitteln und eine Gruppe von Punkten zu erfassen;
   eine Kamera (14), die dazu konfiguriert ist, ein aufgenommenes Bild der Umgebung des eigenen Fahrzeugs zu erzeugen; und
   eine Steuerung (11), die dazu konfiguriert ist, Punkte, die in der erfassten Gruppe von Punkten enthalten sind, zu gruppieren und die Punkte zu einer Gruppe von Objektkandidatenpunkten (p1 - p21) zu klassifizieren, und aus den Objektkandidatenpunkten, wobei die Objektkandidatenpunkte Punkte sind, die in der Gruppe der Objektkandidatenpunkte enthalten sind, eine Position, an der eine Abstandsänderung von dem eigenen Fahrzeug zwischen benachbarten Objektkandidatenpunkten von einem Wert, der gleich oder kleiner als ein vorgegebener Schwellenwert ist, auf einen Wert zunimmt, der größer als der vorgegebene Schwellenwert ist, als einen Grenzpositionskandidaten (p1, p7, p10, p21) zu extrahieren, wobei der Grenzpositionskandidat eine äußere Endposition eines Objekts ist, und einen Bereich, in dem eine Person in dem aufgenommenen Bild erkannt wird, als einen Teilbereich (R) durch Bilderkennungsverarbeitung zu extrahieren,
   **dadurch gekennzeichnet, dass** die Steuerung (11) zu Folgendem konfiguriert ist:

   Bestimmen, ob in dem aufgenommenen Bild eine Position eines der Grenzpositionskandidaten in der vorgegebenen Richtung mit einer Grenzposition des Teilbereichs übereinstimmt oder nicht, wobei die Grenzposition eine äußere Endposition des Teilbereichs ist;
   wenn die Position des Grenzpositionskandidaten mit der Grenzposition des Teilbereichs übereinstimmt, Erkennen, dass ein Fußgänger in dem Teilbereich vorhanden ist, und Erkennen, als den Fußgänger, einer Gruppe von Punkten, die sich in dem Teilbereich befinden, aus der Gruppe von Objektkandidatenpunkten, die in ein Bildkoordinatensystem des aufgenommenen Bildes projiziert werden.

**10.** Objekterkennungsvorrichtung nach Anspruch 9, wobei der Sensor ein Entfernungssensor ist, der so konfiguriert ist, dass er ausgehende Wellen zur Entfernungsmessung aussendet und die Umgebung des eigenen Fahrzeugs in der vorgegebenen Richtung abtastet.

**Revendications**

**1.** Procédé de reconnaissance d'objet comprenant :

la détection (S1) d'une pluralité de positions sur des surfaces d'objets aux alentours d'un véhicule personnel suivant une direction prédéterminée et l'acquisition d'un groupe de points ;
la génération d'une image capturée des alentours du véhicule personnel ;
le groupage (S2) de points inclus dans le groupe de points acquis et le classement des points à l'intérieur d'un groupe de points candidats d'objet (p1 - p21) ;
l'extraction (S5), parmi des points candidats d'objet, les points candidats d'objet étant des points inclus dans le groupe de points candidats d'objet, d'une position à laquelle une variation de distance par rapport au véhicule personnel entre des points candidats d'objet adjacents augmente depuis une valeur égale ou inférieure à une valeur de seuil prédéterminée jusqu'à une valeur supérieure à la valeur de seuil prédéterminée en tant que candidat de position de limite (p1, p7, p10, p21), le candidat de position de limite étant une position d'extrémité externe d'un objet ; et
l'extraction (S6) d'une région dans laquelle une personne est détectée dans l'image capturée en tant que région partielle (R) au moyen d'un traitement de reconnaissance d'image ;
**caractérisé par** :

la détermination (S8) de si, dans l'image capturée, une position de l'un quelconque des candidats de position de limite dans la direction prédéterminée coïncide ou non avec une position de limite de la région partielle, la position de limite étant une position d'extrémité externe de la région partielle ;
lorsque la position du candidat de position de limite coïncide avec la position de limite de la région partielle, la reconnaissance (S10) du fait qu'un piéton est présent dans la région partielle ; et
la reconnaissance, en tant que piéton, d'un groupe de points localisés dans la région partielle parmi le groupe de points candidats d'objet projetés à l'intérieur d'un système de coordonnées d'image de l'image capturée.

**2.** Procédé de reconnaissance d'objet selon la revendication 1, dans lequel le procédé extrait une position à laquelle une courbure d'une courbe approximative calculée à partir du groupe de points candidats d'objet excède une valeur prédéterminée en tant que candidat de position de limite.

**3.** Procédé de reconnaissance d'objet selon la revendication 2, dans lequel :

le procédé acquiert le groupe de points en balayant les alentours du véhicule personnel dans la direction prédéterminée à l'aide d'ondes sortantes à des fins de détermination de distance en relation avec chacune de couches déterminées d'une manière en correspondance par rapport à des angles d'émission dans une direction verticale des ondes sortantes, et
le procédé calcule la courbe approximative et extrait le candidat de position de limite en relation avec chacune des couches.

**4.** Procédé de reconnaissance d'objet selon la revendication 2, dans lequel :

le procédé acquiert le groupe de points en balayant les alentours du véhicule personnel dans la direction prédéterminée à l'aide d'ondes sortantes à des fins de détermination de distance en relation avec chacune d'une pluralité de couches présentant des angles d'émission différents dans une direction verticale des ondes sortantes,
le procédé extrait le candidat de position de limite en projetant les groupes de points candidats d'objet dans la pluralité de couches sur un plan bidimensionnel identique et en calculant la courbe approximative à partir des groupes de points candidats d'objet projetés sur le plan bidimensionnel, et

le plan bidimensionnel est un plan non perpendiculaire à un plan obtenu en tant que trajectoire d'un axe d'émission des ondes sortantes lors d'un balayage dans la direction prédéterminée.

5. Procédé de reconnaissance d'objet selon la revendication 4, dans lequel :
le procédé définit une pluralité de plages de hauteurs, et le procédé projette le groupe de points candidats d'objet dans une plage de hauteurs identique sur un plan bidimensionnel identique et projette les groupes de points candidats d'objet dans des plages de hauteurs différentes sur des plans bidimensionnels différents.

6. Procédé de reconnaissance d'objet selon l'une quelconque des revendications 1 et 2 à 5, comprenant :

le groupage de candidats de position de limite adjacents et le classement des candidats de position de limite à l'intérieur d'un groupe de candidats de position de limite ; et
le calcul d'un centroïde du groupe de candidats de position de limite,
dans lequel, lorsqu'une position du centroïde coïncide avec une position de limite de la région partielle, le procédé reconnaît qu'un piéton est présent dans la région partielle.

7. Procédé de reconnaissance d'objet selon l'une quelconque des revendications 1 et 2 à 5, comprenant :

le groupage de candidats de position de limite adjacents et le classement des candidats de position de limite à l'intérieur d'un groupe de candidats de position de limite ; et
le calcul d'une ligne droite approximative à partir du groupe de candidats de position de limite,
dans lequel, lorsqu'une position de la ligne droite approximative coïncide avec une position de limite de la région partielle, le procédé reconnaît qu'un piéton est présent dans la région partielle.

8. Procédé de reconnaissance d'objet selon l'une quelconque des revendications 1 et 2 à 5, comprenant :

le groupage de candidats de position de limite adjacents et le classement des candidats de position de limite à l'intérieur d'un groupe de candidats de position de limite ; et
le calcul d'une région inclusive, la région inclusive étant une région incluant le groupe de candidats de position de limite,
dans lequel, lorsque la région inclusive chevauche une région de limite de la région partielle, le procédé reconnaît qu'un piéton est présent dans la région partielle.

9. Dispositif de reconnaissance d'objet (2) comprenant :

un capteur (15) configuré pour détecter une pluralité de positions sur des surfaces d'objets aux alentours d'un véhicule personnel suivant une direction prédéterminée et pour acquérir un groupe de points ;
une caméra (14) configurée pour générer une image capturée des alentours du véhicule personnel ; et
un contrôleur (11) configuré pour grouper des points inclus dans le groupe de points acquis et pour classer les points à l'intérieur d'un groupe de points candidats d'objet (p1 - p21), pour extraire, parmi des points candidats d'objet, les points candidats d'objet étant des points inclus dans le groupe de points candidats d'objet, une position à laquelle une variation de distance par rapport au véhicule personnel entre des points candidats d'objet adjacents augmente depuis une valeur égale ou inférieure à une valeur de seuil prédéterminée jusqu'à une valeur supérieure à la valeur de seuil prédéterminée en tant que candidat de position de limite (p1, p7, p10, p21), le candidat de position de limite étant une position d'extrémité externe d'un objet, pour extraire une région dans laquelle une personne est détectée dans l'image capturée en tant que région partielle (R) au moyen d'un traitement de reconnaissance d'image ;
**caractérisé en ce que** le contrôleur (11) est configuré pour :

déterminer si, dans l'image capturée, une position de l'un quelconque des candidats de position de limite dans la direction prédéterminée coïncide ou non avec une position de limite de la région partielle, la position de limite étant une position d'extrémité externe de la région partielle ;
lorsque la position du candidat de position de limite coïncide avec la position de limite de la région partielle, reconnaître qu'un piéton est présent dans la région partielle, et
reconnaître, en tant que piéton, un groupe de points localisés dans la région partielle parmi le groupe de points candidats d'objet projetés à l'intérieur d'un système de coordonnées d'image de l'image capturée.

10. Dispositif de reconnaissance d'objet selon la revendication 9, dans lequel le capteur est un capteur de distance configuré pour émettre des ondes sortantes à des fins de détermination de distance et pour balayer les alentours du véhicule personnel dans la direction prédéterminée.

# FIG. 1

# FIG. 2

DEPTH
DIRECTION

V1

V2

MAIN-SCANNING
DIRECTION

14　15

1

# FIG. 3

EP 4 099 060 B1

# FIG. 4A

# FIG. 4B

24

# FIG. 5A

# FIG. 5B

# FIG. 5C

# FIG. 5D

## FIG. 6

# FIG. 7A

# FIG. 7B

# FIG. 8

# FIG. 9

```
              ( START )
                  │
                  ▼
   ┌──────────────────────────────┐
   │    ACQUIRE GROUP OF POINTS     │──── S1
   └──────────────────────────────┘
                  │
                  ▼
   ┌──────────────────────────────┐
   │   CLASSIFY GROUP OF POINTS INTO │──── S2
   │ GROUP OF OBJECT CANDIDATE POINTS│
   └──────────────────────────────┘
                  │
                  ▼
   ┌──────────────────────────────┐
   │   CALCULATE APPROXIMATE CURVE   │──── S3
   └──────────────────────────────┘
                  │
                  ▼
   N        ╱ POSITION AT WHICH ╲         S4
   ◄───────╱ CURVATURE EXCEEDS PREDETERMINED ╲
            ╲       VALUE EXISTS?      ╱
                      │ Y
                      ▼
   ┌──────────────────────────────┐
   │ EXTRACT BOUNDARY POSITION CANDIDATE │──── S5
   └──────────────────────────────┘
                  │
                  ▼
   ┌──────────────────────────────┐
   │    EXTRACT PARTIAL REGION IN WHICH │──── S6
   │ PERSON IS DETECTED BY IMAGE RECOGNITION │
   │  PROCESSING WITHIN CAPTURED IMAGE │
   └──────────────────────────────┘
                  │
                  ▼
   ┌──────────────────────────────┐
   │   PROJECT BOUNDARY POSITION     │──── S7
   │ CANDIDATES ON IMAGE COORDINATE SYSTEM │
   └──────────────────────────────┘
                  │
                  ▼
   N          ╱ POSITIONS OF ╲            S8
   ◄─────────╱ BOUNDARY POSITION CANDIDATES ╲
             ╲ AND BOUNDARY POSITIONS OF PARTIAL ╱
              ╲ REGION COINCIDE WITH ╱
               ╲   EACH OTHER?   ╱
                      │ Y
                      ▼
   ┌──────────────────────────────┐
   │ PROJECT GROUP OF OBJECT CANDIDATE │──── S9
   │ POINTS INTO IMAGE COORDINATE SYSTEM │
   └──────────────────────────────┘
                  │
                  ▼
   ┌──────────────────────────────┐
   │ CUT OUT GROUP OF POINTS IN PARTIAL REGION │──── S10
   └──────────────────────────────┘
                  │
                  ▼      S11
               ╱ IGN ╲    N
               ╲ OFF? ╱────►
                  │ Y
                  ▼
              ( END )
```

# FIG. 10

SL1 SL2

100

101

MAIN-SCANNING
DIRECTION

SL3

SL4

# FIG. 11

| 15 | 20 | 21 | 11 |
|---|---|---|---|
| RANGE SENSOR | OBJECT-CANDIDATE -POINT-GROUP EXTRACTION UNIT | BOUNDARY-POSITION -CANDIDATE EXTRACTION UNIT | OBJECT RECOGNITION CONTROLLER |

25
BOUNDARY CANDIDATE CALCULATION UNIT

23
COMPARISON UNIT

24
OBJECT RECOGNITION UNIT

TO TRAVEL CONTROL UNIT 12

14
CAMERA

22
PARTIAL-REGION EXTRACTION UNIT

# FIG. 12A

# FIG. 12B

FIG. 13

# FIG. 14

```
                    ┌──────────┐
                    │  START   │
                    └──────────┘
                          │
          ┌───────────────────────────────┐
          │  ACQUIRE GROUP OF POINTS       │── S21
          │  IN EACH OF PLURAL LAYERS      │
          └───────────────────────────────┘
                          │
          ┌───────────────────────────────┐
          │  CLASSIFY GROUPS OF POINTS INTO│── S22
          │  GROUPS OF OBJECT CANDIDATE    │
          │  POINTS                        │
          └───────────────────────────────┘
                          │
          ┌───────────────────────────────┐
          │  CALCULATE APPROXIMATE CURVES  │── S23
          └───────────────────────────────┘
                          │
              POSITIONS AT WHICH                   S24
    N    CURVATURE EXCEEDS PREDETERMINED
  ◄────         VALUE EXIST?
                          │ Y
          ┌───────────────────────────────┐
          │  CALCULATE INCLUSIVE           │── S25
          │  REGIONS INCLUDING GROUPS OF   │
          │  BOUNDARY POSITION CANDIDATES  │
          └───────────────────────────────┘
                          │
          ┌───────────────────────────────┐
          │  EXTRACT PARTIAL REGION IN WHICH │── S26
          │  PERSON IS DETECTED BY IMAGE     │
          │  RECOGNITION PROCESSING WITHIN   │
          │  CAPTURED IMAGE                  │
          └───────────────────────────────┘
                          │
          ┌───────────────────────────────┐
          │  PROJECT INCLUSIVE REGIONS     │── S27
          │  INTO IMAGE COORDINATE SYSTEM  │
          └───────────────────────────────┘
                          │
              INCLUSIVE REGIONS                    S28
    N    OVERLAP BOUNDARY POSITIONS OF
  ◄────         PARTIAL REGION?
                          │ Y
          ┌───────────────────────────────┐
          │  PROJECT GROUPS OF CANDIDATE   │── S29
          │  OBJECT POINTS INTO IMAGE      │
          │  COORDINATE SYSTEM             │
          └───────────────────────────────┘
                          │
          ┌───────────────────────────────┐
          │ CUT OUT GROUP OF POINTS IN     │── S30
          │ PARTIAL REGION                 │
          └───────────────────────────────┘
                          │
                        S31     N
                    IGN ───────
                    OFF?
                          │ Y
                    ┌──────────┐
                    │   END    │
                    └──────────┘
```

# FIG. 15A

# FIG. 15B

FIG. 16A

FIG. 16B

FIG. 16C

**EP 4 099 060 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010071942 A
- US 2006184274 A1
- US 2019371056 A1